(19) Europäisches Patentamt
European Patent Office
Office européen des brevets

(11) EP 1 195 353 A1

(12) **EUROPEAN PATENT APPLICATION**
published in accordance with Art. 158(3) EPC

(43) Date of publication:
**10.04.2002 Bulletin 2002/15**

(21) Application number: **00913078.2**

(22) Date of filing: **03.04.2000**

(51) Int Cl.[7]: **C01B 3/50**, B01D 53/14, C10K 3/04, C10L 3/00, C10J 3/00, H01M 8/06, H01M 8/08, H01M 8/10

(86) International application number:
**PCT/JP00/02149**

(87) International publication number:
**WO 00/59825 (12.10.2000 Gazette 2000/41)**

(84) Designated Contracting States:
**AT BE CH CY DE DK ES FI FR GB GR IE IT LI LU MC NL PT SE**
Designated Extension States:
**AL LT LV MK RO SI**

(30) Priority: **02.04.1999 JP 9656599**

(71) Applicant: **EBARA CORPORATION**
**Ohta-ku, Tokyo 144-8510 (JP)**

(72) Inventors:
- **SU, Qingquan, Ebara Corporation Tokyo 144-8510 (JP)**
- **KINOSHITA, Kazuo, Ebara Corporation Tokyo 144-8510 (JP)**
- **OSHITA, Takahiro, Ebara Corporation Tokyo 144-8510 (JP)**
- **MIYOSHI, Norihisa, Ebara Corporation Tokyo 144-8510 (JP)**
- **NARUSE, Katsutoshi, Ebara Corporation Tokyo 144-8510 (JP)**

(74) Representative: **Wagner, Karl H., Dipl.-Ing.**
**Wagner & Geyer,**
**Patentanwälte,**
**Gewürzmühlstrasse 5**
**80538 München (DE)**

# (54) METHOD AND APPARATUS FOR PRODUCTION OF HYDROGEN BY GASIFICATION OF COMBUSIBLE MATERIAL

(57) The present invention relates to a technology for recovering chemical energy of combustibles in the form of hydrogen gas and a technology for converting hydrogen gas to electric energy with high efficiency. A hydrogen production method by gasification of combustibles comprises a gasification step (1) for gasifying combustibles (a) and a gas processing step (1a) for producing hydrogen by refining the gas (b) produced in the gasification step (1). The gas processing step (1a) comprises a gas scrubbing step (2) for absorbing and removing dust and a trace amount of acid gases such as hydrogen chloride and hydrogen sulfide in the produced gas (b) obtained in the gasification step (1) by bringing the produced gas into contact with water or alkali solution, and a carbon monoxide adsorption step (7) for adsorbing and separating carbon monoxide by bringing the produced gas (b) scrubbed in the gas scrubbing step (2) into contact with carbon monoxide adsorbent.

FIG. 3

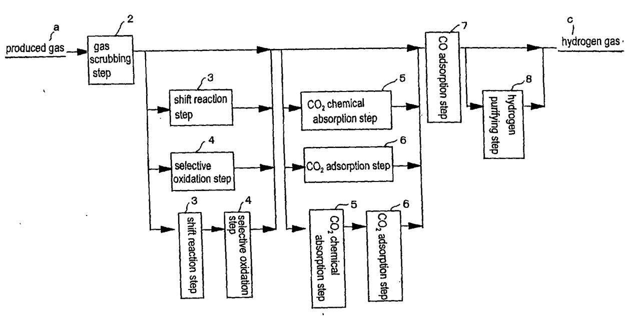




Printed by Jouve, 75001 PARIS (FR)

## Description

### Technical Field

The present invention relates to a technology for recovering chemical energy of combustibles in the form of hydrogen gas and a technology for converting hydrogen gas to electric energy with high efficiency, and more particularly to a system in which combustibles such as combustible wastes or coal are gasified to produce gas and the produced gas is utilized to produce hydrogen gas and an electric generating system in which the produced hydrogen gas is supplied to a fuel cell to generate electricity. Here, combustible wastes include municipal wastes, refuse-derived fuel, solid-water mixture, used paper, plastic wastes, waste FRP, biomass wastes, automobile wastes, industrial wastes such as waste wood, low-grade coal, and waste oil.

### Background Art

In recent years, there has been a growing tendency for environmental protection, and various attempts regarding an electric generating system have been made to generate electricity by utilizing combustible wastes as an energy source. One of the attempts is to employ a combined-cycle electric generating system in which combustibles are gasified under pressure to produce gas, the produced gas is used to drive a gas turbine, and a heat of exhaust gas discharged from the gas turbine is recovered by a waste heat boiler to drive a steam turbine, and thus the gas turbine and the steam turbine are used in combination to perform combined-cycle power generation for thereby generating electricity with high efficiency.

However, in the above combined-cycle electric generating system, a low calorific gas is difficult to be utilized, and pollutants such as nitrogen oxide, sulfur oxide and dioxins which have a bad influence on environment are generated because combustion is indispensable, thus causing an increase of environment load.

On the other hand, there has been being developed a fuel cell technology having a high efficiency and low environment load which corresponds to an electric generating system for converting chemical energy of hydrogen to electric energy directly. In order to make the best use of such electric generating technology, it is indispensable to develop a production system of high quality hydrogen gas and to prepare infrastructure related to hydrogen such as hydrogen gas stations. Specifically, it is necessary to supply hydrogen gas having a high concentration which hardly contains gas components such as hydrogen sulfide or carbon monoxide poisonous to a polymer electrolyte fuel cell which is optimum for fuel cell vehicles or household electric generating systems. However, in the present circumstances, natural gas and methanol which can be relatively easily reformed are employed as material of hydrogen.

### Disclosure of Invention

The present invention has been made in view of the above, and it is therefore an object of the present invention to provide a system for producing hydrogen gas which is suitable for a fuel cell, especially a polymer electrolyte fuel cell from gases produced by gasification of combustibles in order to change solid waste incinerating facilities into a hydrogen gas station or a power plant which does not pollute the environment, and to provide a non-incineration power generation system having reduced environment load wherein the produced hydrogen gas is supplied to a fuel cell to generate electricity with high efficiency.

In order to achieve the above object, the inventors of the present application have studied earnestly and found the following, and have made the present invention which relates to a hydrogen production system (a system shown in FIG. 1) for producing high quality hydrogen gas efficiently which is suitable for fuel cell power generation from low quality gas produced by gasification of combustibles, and a fuel cell power generation system (a system shown in FIG. 2) which uses the produced hydrogen gas as a fuel. That is, the essence of the present invention is the following (1) to (3).

(1) The grouping of impurity gases is carried out according to their separation characteristics and the optimum separation technology is utilized according to their separation characteristics and concentration range.

(2) Gas treatment is carried out under a relatively low pressure, such as a pressure of atmospheric pressure to about 4 atmospheres or a pressure of 7 atmospheres at the maximum, which is achieved by a blower or a single-stage compressor which is inexpensive and has a high energy efficiency.

(3) A hydrogen purifying step using hydrogen-absorbing alloy is provided for the purpose of separating $N_2$ and Ar gas in gases and raising a pressure of hydrogen gas without consuming power, and thermal energy which is exhaust heat of the fuel cell or is generated in the gasification step is utilized as a heat source for releasing hydrogen from the hydrogen-absorbing alloy.

The produced gas yielded in the gasification of combustibles varies with the type of combustibles. In general, the produced gas contains several percent to several ten percent of hydrogen and carbon monoxide as fuel cell components, and several percent to several ten percent of carbon dioxide, nitrogen, argon and steam as non-fuel-gas components, and further contains several ppm to several thousands of ppm of hydrogen sulfide and hydrogen chloride as minor acid gas components.

However, as hydrogen gas supplied to the fuel cell, a high hydrogen concentration, and a carbon monoxide concentration as low as possible are required. Specifically, in case of a polymer electrolyte fuel cell, it is necessary to lower carbon monoxide concentration to 100 ppm or less, preferably 10 ppm or less. Further, because acid gases, especially hydrogen sulfide and hydrogen chloride are poisonous to electrode catalyst of a fuel cell, and various gas absorbent, adsorbent and catalyst in the subsequent steps, it is necessary to remove such acid gases down to 1 ppm or less, preferably 0.1 ppm or less. Further, in order to increase hydrogen concentration, it is necessary to separate carbon dioxide, nitrogen and argon. Furthermore, in the case of providing the hydrogen purifying step using hydrogen-absorbing alloy, because carbon dioxide and steam are poisonous to the hydrogen-absorbing alloy, it is desirable that they are lowered to 100 ppm or less, preferably 10 ppm or less, respectively.

In the conventional hydrogen purifying technology, impurity gases other than hydrogen are generally separated and removed by a single step such as a pressure swing adsorption (PSA) step or a membrane separation step. However, in this case, a high pressure is required to thus consume large energy, and the recovery rate of hydrogen is low. In the present invention, impurity gases other than hydrogen are divided into four groups, i.e. acid gases, carbon monoxide, carbon dioxide and steam, and nitrogen and argon according to their separation characteristics, and an optimum separation technology is employed according to their separation characteristics and concentration range.

Acid gases such as hydrogen sulfide and hydrogen chloride are scrubbed and removed by dissolution of such acid gases into a scrubbing liquid and chemical reaction thereof in a scrubbing step.

In the case where carbon monoxide concentration in the produced gas is not more than 5000 ppm, or not more than 10 percent according to the conditions, carbon monoxide can be adsorbed and separated only by a CO adsorption step because adsorption load is relatively small. When gases other than CO, for example, nitrogen and argon are adsorbed in the adsorption step, CO adsorption capability is lowered, and hence adsorbent having selective adsorption characteristics of CO is used. Further, in the case where CO concentration is not less than 5000 ppm, a selective oxidation step of CO may be provided upstream of the CO adsorption step for the purpose of reducing adsorption load in the CO adsorption step. Further, in the case where CO concentration is not less than 3 percent and the selective oxidation step is provided upstream of the CO adsorption step, a shift reaction step may be provided upstream of the selective oxidation step. According to the present invention, in the embodiment in which the shift reaction step is provided, CO recovered by desorption in the CO adsorption step is returned to the scrubbing step and recovered. Further, in the embodiment in which the shift reaction step is not provided, CO recovered in the CO adsorption step is returned to the gasification step and processed in the gasification step.

With regard to carbon dioxide and steam, there is provided a carbon dioxide chemical absorption step in which carbon dioxide is chemically absorbed by alkaline absorption solution and steam is condensed and removed at the absorption temperature. As a separating method of $CO_2$ gas, there are a membrane separation method, an adsorption method and a chemical absorption method. In the present invention, exhaust heat generated in large quantities in the gasification step or the fuel cell power generation step can be utilized, and absorption can be performed under a low pressure such as a pressure of atmospheric pressure to about 4 atmospheres or a pressure of 7 atmospheres at the maximum. Further, the recovery rate of hydrogen is extremely high, acid gases such as hydrogen sulfide and hydrogen chloride can be further absorbed and removed, and $CO_2$ gas separated and recovered has high purity and thus high commercial value. Therefore, it is desirable to use carbon dioxide chemical absorption method. Further, in the case of providing the hydrogen purifying step using hydrogen-absorbing alloy, in order to prevent the hydrogen-absorbing alloy from being poisoned with carbon dioxide and steam, a carbon dioxide adsorption step using a pressure swing adsorption (PSA) method is further provided downstream of the chemical adsorption step to adsorb and remove carbon dioxide and steam down to 100 ppm or less, preferably 10 ppm or less. Further, it is possible to separate $CO_2$ only by a $CO_2$ adsorption step without providing the chemical absorption step. In this embodiment of the present invention, the recovery rate of hydrogen is so low as to be 60 to 80 percent, and there is a disadvantage that the recovered $CO_2$ gas has low purity and cannot be utilized, but there is an advantage that the process is simple. In the case where the chemical adsorption step is provided at the preceding step, the adsorption load in the $CO_2$ adsorption step is very small, and hence the $CO_2$ adsorption step and the subsequent CO adsorption step may be integrated by filling the same adsorption tower with respective adsorbents.

With respect to nitrogen and argon, a hydrogen purifying step using hydrogen purifying function of hydrogen-absorbing alloy is provided. Since $N_2$ and Ar are inactive gas, in the case of separating these gases from hydrogen by the adsorption method or the chemical absorption method, the energy efficiency is very low. In the separation method using hydrogen-absorbing alloy, hydrogen is absorbed selectively, and hence the energy efficiency of such separation method is higher than those of the adsorption method and the absorption method, and at the same time the pressure rise of hydrogen can be advantageously performed. In the case of using the purified hydrogen gas as a fuel gas in a fuel cell power generation, the higher a pressure of hydrogen is, within the allowable pressure of a cell stack, the higher the power generation efficiency is.

Conventionally, in most cases, separation of gases is carried out under a pressure of 8 atmospheres or higher. However, because gases produced by gasification of combustibles contain hydrogen whose concentration is so low as to be 50 percent or less, if gas separation is carried out under high-pressure condition, a large amount of gases must be pressurized, so a large compressing equipment (multi-stage compressor) is necessary, consumption of energy is great and the energy efficiency is lowered. According to the present invention, as described above, since gases are separated and removed according to grouping of the gases, gas treatment can be carried out under a relatively low pressure, such as a pressure of atmospheric pressure to about 4 atmospheres or a pressure of 7 atmospheres at the maximum, which is achieved by a blower or a single-stage compressor which is inexpensive and has a high energy efficiency.

In the gasification step of combustibles, a large amount of thermal energy is generated, and hence it is important to utilize such thermal energy effectively. Further, when fuel cell power generation is carried out, chemical energy of fuel gas is converted into electric energy, and thermal energy which is approximately the same amount as the electric energy, and such thermal energy is recovered as cooling exhaust heat of the cell. However, in the case of a phosphoric acid fuel cell, especially a polymer electrolyte fuel cell, the recovered exhaust heat is low value heat having a temperature of about 70 to 80°C because the operating temperature of the fuel cell is low. Therefore, how to utilize such exhaust heat effectively is very important to improve total energy efficiency in the power generation system.

According to the present invention, a hydrogen purifying step using hydrogen-absorbing alloy is provided for the purpose of separating $N_2$ and Ar gas from gases and raising the pressure of hydrogen gas without consuming power. As a heat source for releasing hydrogen from the hydrogen-absorbing alloy in the hydrogen purifying step, in the embodiment in which the fuel cell power generation step is provided, the exhaust heat of the fuel cell is utilized, and in the embodiment in which the fuel cell is not provided, the thermal energy generated in the gasification step is utilized.

Therefore, in the present invention, the energy efficiency in the hydrogen production system and the fuel cell power generation system is promoted, and the economical efficiency of the hydrogen production system and the fuel cell power generation system is improved.

These steps will be explained in more detail.

1) Gasification step

In a gasification step of the present invention, there are two types, one is a single-stage gasification step using a low-temperature gasification furnace, the other is a two-stage gasification step using a low-temperature gasification furnace and a high-temperature gasification furnace.

In the single-stage gasification step, combustibles comprising wastes are supplied to a low-temperature gasification furnace as a fluidized-bed gasification furnace where the combustibles are pyrolyzed in the temperature range of 400 to 1000°C to produce gases containing hydrogen and carbon monoxide and a trace amount of hydrocarbons. In this case, raising the temperature from temperature at the time of the introduction of the raw material to the temperature in the range of 400 to 1000°C is carried out by partial combustion of the combustibles. Incombustibles contained in the combustibles are discharged from the gasification furnace. The gasification furnace may be a fluidized-bed furnace, or alternatively may be a rotary kiln, a stoker furnace or the like. When combustibles, such as municipal wastes, which have irregular shapes and contain incombustibles are used as the raw material, it is desirable to use the fluidized-bed furnace. This is because in the fluidized-bed furnace, unburned material does not adhere to the incombustibles to be discharged from the furnace, thus being less likely to pose a problem of the treatment and disposal of incombustibles. Further, when the fluidized-bed furnace is adopted, the bed temperature is preferably low so far as pyrolysis is not hindered. Specifically, the furnace is preferably operated at a temperature of 400 to 600°C because the incombustibles are not oxidized and thus can be easily reutilized.

In the two-stage gasification step, combustibles are pyrolyzed and gasified at a temperature of 400 to 1000°C in a low-temperature gasification furnace to produce gas, and the produced gas is supplied into a high-temperature gasification furnace. In the high-temperature gasification furnace, the produced gas is further gasified at a temperature of 1000 to 1500°C to reduce the molecular weight of the produced gas. The high-temperature gasification furnace is kept at the melting temperature of ash content contained in the produced gas or higher. Thus, 80 to 90% of the ash content contained in the produced gas is slagged, and the slag is discharged as molten slag to the outside of the system. The organic matter and hydrocarbons contained in the produced gas are completely decomposed in the high-temperature gasification furnace into hydrogen, carbon monoxide, steam, and carbon dioxide.

2) Scrubbing step

According to the present invention, gases are brought in contact with a scrubbing water in a scrubbing tower of a scrubbing step to remove acid gases such as hydrogen sulfide and hydrogen chloride down to 10 ppm or less, preferably 1 ppm or less. As a scrubbing water, tap water or industrial water may be used, but alkali solution comprising water and 0.05 to 5% of added sodium hydroxide is more preferable. In the case of using sodium hydroxide solution as a scrubbing water, acid gases are absorbed and removed by the following neutralization reaction. Soot and dust in the produced gas are scrubbed and removed in this step because they would cause clogging of gas passages in the subsequent steps.

$$H_2S + 2NaOH \rightarrow Na_2S + 2H_2O \quad (1)$$

$$HCl + NaOH \rightarrow NaCl + H_2O \quad (2)$$

3) Carbon monoxide adsorption step

According to the present invention, in order to keep carbon monoxide concentration in hydrogen gas to 100 ppm or less, preferably 10 ppm or less, a carbon monoxide adsorption step using a pressure swing adsorption (PSA) method is provided. Specifically, the gases are introduced into an adsorption tower filled with CO adsorbent to adsorb and separate CO in the gases. In order to give full play to adsorption ability of the adsorption tower, it is desirable that adsorbent having selective adsorption property of CO is filled into the adsorption tower. Specifically, adsorbent having a relatively high adsorption ability of CO and a low adsorption ability of $CO_2$, $N_2$ and Ar is preferred, for example, zeolite molecular sieves, carbon molecular sieves, activated carbon, or activated alumina is preferable, and CO selective adsorption agent produced by reforming the above adsorbent with chemicals having affinity for CO is more preferable. The lower adsorption temperature is, the more advantageous adsorbent is, but the temperature range of 25 to 40°C which can be relatively easily controlled is preferable. The higher gas pressure is, the more advantageous adsorption is, but in the present invention, because adsorbent having a relatively high adsorption ability is used, CO can be sufficiently adsorbed and separated even in a low pressure range such as a pressure of atmospheric pressure to about 4 atmospheres or a pressure of 7 atmospheres at the maximum. Further, when the adsorption ability of the employed adsorbent is saturated, the adsorbent is desorbed under depressurized condition using a vacuum pump, and the desorbed CO gas is returned to the inlet of the scrubbing step or the gasification step and recovered. As the desorption pressure is lowered by the vacuum pump, the pressure differential between the adsorption pressure and the desorption pressure is increased, and hence the processing ability of the adsorption tower is improved, but the power consumption in the vacuum pump is increased. Therefore, the desorption pressure is preferably in the range of 13300 to 1330 Pa (100 to 10 Torr).

4) Selective oxidation step

According to the present invention, in the case where carbon monoxide concentration in the scrubbed gas is 5000 ppm (0.5 %) or more, a selective oxidation step is provided to lower the concentration of carbon monoxide to 5000 ppm or less, preferably 500 ppm or less. That is, the following selective oxidation reaction is carried out by supplying oxygen or air to a selective oxidation reactor packed with a selective oxidation catalyst while leading the above gases to the selective oxidation reactor.

$$CO + 1/2O_2 \rightarrow CO_2 \quad (3)$$

The larger the amount of oxygen supplied, the lower the concentration of the residual carbon monoxide. In the embodiment in which the hydrogen purifying step using hydrogen-absorbing alloy is provided, because an excess amount of oxygen gas is poisonous to the hydrogen-absorbing alloy, the amount of oxygen is preferably around 1 equivalent to carbon monoxide. The reaction temperature is preferably in the range of 100 to 150°C. Any catalyst may be used without particular limitation as long as the catalyst has high selectivity for oxidation of carbon monoxide and can realize high reaction rate. For example, a platinum-based catalyst or a gold catalyst with gold supported on alumina is suitable.

5) Shift reaction step

According to the present invention, in the case where carbon monoxide concentration in the scrubbed gas is 3 % or more, a shift reaction step is provided for the purpose of lowering carbon monoxide concentration to 1 % or less, preferably 0.5 % or less and increasing the concentration of hydrogen which is a target gas component. That is, the following shift reaction is carried out in a shift reactor packed with a shift reaction catalyst.

$$CO + H_2O \rightarrow CO_2 + H_2 \qquad (4)$$

Steam contained in the produced gas is utilized as steam necessary for the reaction. The shift reaction is an exothermic reaction. Therefore, a lower reaction temperature lowers the equilibrium concentration of carbon monoxide, while brings the reaction rate down. For this reason, the reaction temperature is preferably in the range of 200 to 250°C. The type and form of the catalyst are not particularly limited as long as the shift reaction can be accelerated. Catalysts suitable for use in the above temperature range include copper-zinc-base shift reaction catalysts.

If the gasification temperature in the gasification step is relatively low, for example 700°C or lower, the gas reaction such as water gas reaction in the gasification step does not progress sufficiently, and in some cases, hydrocarbon components such as methane or tar remain in the produced gas. In this case, a reforming step may be provided upstream of the shift reaction step. That is, hydrocarbon components are reacted with steam at a temperature of 700 to 1000°C under a reforming catalytic action for thereby decomposing the hydrocarbon components and producing hydrogen and carbon monoxide.

6) Carbon dioxide chemical absorption step

According to the present invention, a carbon dioxide chemical absorption step is provided, and gases are brought in contact with an absorption solution in an absorbing tower to absorb and separate $CO_2$. As an absorption solution, hot potassium carbonate absorption solution or alkanolamine absorption solution is preferable, and in the present invention, alkanolamine absorption solution having a high absorbing ability is more preferable. Specific examples of absorbents applicable herein include monoethanolamine (MEA), diethanolamine (DEA), and methyldiethanolamine (MDEA) and the like. An absorption reaction by alkanolamine absorption solution is represented by the following formula:

$$R\text{-}NH_2 + H_2O + CO_2 \rightarrow R\text{-}NH_3HCO_3 \qquad (5)$$

Since the above reaction is an exothermic reaction, the lower adsorption temperature is, the more advantageous adsorption is, but the temperature range of 25 to 40°C which can be relatively easily controlled is preferable. The higher gas pressure is, the more advantageous adsorption is, but in the present invention, because absorption solution having a relatively high absorption ability is used, $CO_2$ can be absorbed and separated down to 5000 ppm or less, preferably 100 ppm or less in a low pressure range such as a pressure of atmospheric pressure to about 4 atmospheres or a pressure of 7 atmospheres at the maximum. Further, when the absorption ability of the employed absorption solution is saturated, the absorption solution is sent to a regeneration tower in which the absorption solution is regenerated at a temperature of 100 to 150°C and $CO_2$ gas is recovered. The regenerated absorption solution is returned to the absorption tower. As a heat source required for heating the absorption solution at the time of regeneration, steam recovered in the gasification step is used. Steam in the gases is removed by condensation to such a degree of saturation vapor pressure of absorption temperature in this step, and the remaining steam is adsorbed and separated in the subsequent adsorption step or the preceding treatment equipment. Acid gases such as hydrogen sulfide and hydrogen chloride are further absorbed and removed in this step.

7) Carbon dioxide adsorption step

According to the present invention, a carbon dioxide adsorption step using a pressure swing adsorption (PSA) method is provided downstream of the carbon dioxide chemical adsorption step to adsorb and remove carbon dioxide and steam down to 100 ppm or less, preferably 10 ppm or less. Specifically, the gases are introduced into a $CO_2$ adsorption tower and brought in contact with adsorbent to adsorb and separate $CO_2$ in the gases. In order to give full play to adsorption ability of the adsorption tower, it is desirable that adsorbent having selective adsorption property of $CO_2$ is filled into the adsorption tower. Specifically, adsorbent having a relatively high adsorption ability of $CO_2$ and a

low adsorption ability of CO, especially $N_2$ and Ar is preferred, and, for example, zeolite molecular sieves, carbon molecular sieves, activated carbon, or activated alumina is preferable. The lower adsorption temperature is, the more advantageous adsorption is, but the temperature range of 25 to 40°C which can be relatively easily controlled is preferable. The higher gas pressure is, the more advantageous adsorption is, but in the present invention, because adsorbent having a relatively high adsorption ability is used, $CO_2$ can be sufficiently adsorbed and separated even in a low pressure range such as a pressure of atmospheric pressure to about 4 atmospheres or a pressure of 7 atmospheres at the maximum. Further, when the adsorption ability of the employed adsorbent is saturated, the adsorbent is desorbed under depressurized condition using a vacuum pump, and the desorbed $CO_2$ gas is released to the atmosphere. As the desorption pressure is lowered by the vacuum pump, the pressure differential between the adsorption pressure and the desorption pressure is increased, and hence the processing ability of the adsorption tower is improved, but the power consumption in the vacuum pump is increased. Therefore, the desorption pressure is preferably in the range of 13300 to 1330 Pa (100 to 10 Torr). In order to separate and adsorb steam, a packed bed of adsorbent such as activated alumina or silica gel suitable for adsorbing steam may be preferably provided upstream of the packed bed packed with the adsorbent for carbon dioxide.

According to the present invention, a carbon dioxide chemical absorption step and/or adsorption step are provided downstream of the carbon monoxide shift reaction step and/or the selective oxidation step and upstream of the carbon monoxide adsorption step for the following reason. More specifically, in the case where the carbon dioxide chemical absorption or adsorption step is provided upstream of the carbon monoxide shift reaction and/or selective oxidation step, carbon dioxide produced in the carbon monoxide shift reaction step and/or the selective oxidation step would not be removed, or if carbon dioxide is adsorbed in the carbon monoxide adsorption step, the adsorbing load in the carbon monoxide adsorption step would be increased. Further, in the case where the carbon dioxide chemical absorption or adsorption step is provided downstream of the carbon monoxide adsorption step, the carbon monoxide adsorption step is carried out under coexistence of carbon dioxide, and hence the adsorption efficiency of carbon monoxide in this step is lowered. However, the above embodiment, needless to say, is encompassed in the scope of the present invention.

8) Hydrogen purifying step

According to the present invention, a hydrogen purifying step using hydrogen-absorbing alloy is provided to process gases from which $H_2S$ and HCl have been removed down to 10 ppm or less, preferably 1 ppm or less, and $CO_2$, CO and $H_2O$ have been removed down to 100 ppm or less, preferably 10 ppm or less, respectively. Gases are introduced into a container housing hydrogen-absorbing alloy therein, and hydrogen is absorbed by the hydrogen-absorbing alloy while the alloy is cooled, thus separating $N_2$ and Ar from hydrogen. After the absorption of hydrogen by the hydrogen-absorbing alloy is saturated, nitrogen gas and argon gas are purged from the alloy container, and then the hydrogen-absorbing alloy is heated to release hydrogen therefrom. The released hydrogen gas is pressurized and stored in a hydrogen tank, or is supplied to the fuel cell power generation step via the hydrogen tank. Nitrogen and argon in the hydrogen gas which has been released and purified are removed down to 100 ppm or less, respectively, and the hydrogen concentration reaches 99.9 % or more. The employed hydrogen-absorbing alloy is not particularly limited as long as the hydrogen-absorbing alloy has a large hydrogen absorbing capacity. The hydrogen-absorbing alloy having a desorption pressure of 1 to 10 atmospheres at a temperature of 70°C, preferably an absorbing and releasing property of 3 to 6 atmospheres is desirable so that low exhaust heat having a temperature of about 70°C generated from a phosphoric acid fuel cell or a polymer electrolyte fuel cell can be utilized as a heat source for hydrogen desorption. Specific examples of such alloy include $LaNi_5$ alloy and TiFe alloy. The hydrogen absorption reaction and hydrogen desorption reaction by $LaNi_5$ alloy are represented by the following:

$$\text{Hydrogen absorption reaction: } LaNi_5 + 3H_2 \rightarrow LaNi_5H_6 + \text{exothermicity} \quad (6)$$

$$\text{Hydrogen desorption reaction: } LaNi_5H_6 \rightarrow LaNi_5 + 3H_2 + \text{endothermicity} \quad (7)$$

Because the hydrogen absorption reaction is an exothermic reaction as expressed in the formula (6), in the case where partial pressure of hydrogen is constant, it is necessary to keep absorbing temperature at a low value by cooling the hydrogen-absorbing alloy during hydrogen absorption, especially in case of low partial pressure of hydrogen. The lower hydrogen absorption temperature is, the more advantageous absorption is, but the temperature range of 25 to 35°C which can be easily maintained by a cooling water is preferable. Further, because the hydrogen desorption reaction is an endothermic reaction as expressed in the formula (7), in order to increase the pressure of the released hydrogen, it is necessary to raise desorption temperature by heating the hydrogen-absorbing alloy during hydrogen desorption. According to the present invention, as a heat source, in the embodiment in which a fuel cell power generation step is provided, a cooling water, in a fuel cell stack, having a temperature of about 70°C, or 70 to 80°C depending on conditions is used, and in the embodiment in which the fuel cell power generation step is not provided, the recovered steam in the gasification step is used. Further, the hydrogen-absorbing alloy is housed in a heat exchanger-type container having a jacket for heat exchange, and two series of containers in which the hydrogen-absorbing alloy is housed, respectively, are provided to perform hydrogen absorption and hydrogen desorption continuously, and the two series of the containers are switched by solenoid valves.

9) Fuel cell power generation step

According to the present invention, in the embodiment in which the fuel cell power generation is provided, the hydrogen gas produced in the gas processing step has a relatively low temperature, a high hydrogen concentration, and a low carbon monoxide content. Therefore, the fuel cell employed is preferably a phosphoric acid fuel cell or especially a polymer electrolyte fuel cell, operatable at a relatively low temperature. Cell reactions involved in the phosphoric acid or polymer electrolyte fuel cell are as follows:

$$\text{Anode reaction: } H_2 \rightarrow 2H^+ + 2e^- \qquad (8)$$

$$\text{Cathode reaction: } 1/2O_2 + 2H^+ + 2e^- \rightarrow H_2O \qquad (9)$$

More specifically, hydrogen gas is supplied to the anode compartment in a fuel cell stack while air or oxygen gas is supplied to the cathode compartment, whereby electricity is generated by the cell reactions. The operating temperature of the phosphoric acid fuel cell and the operating temperature of the polymer electrolyte fuel cell are around 200°C and around 80°C, respectively. Since these reactions are exothermic reactions, the stacks must be cooled to maintain the above operating temperatures. According to the present invention, stack cooling water is circulated between the fuel cell power generation step and the hydrogen purifying step using hydrogen-absorbing alloy to utilize stack exhaust heat as a heat source for hydrogen desorption.

Further, in the fuel cell power generation, in order to ensure the power generation efficiency, it is a common practice to leave about 30% of the hydrogen gas or about 20 to 30 % of hydrogen gas depending on conditions which has been supplied to the anode compartment in the stack without consuming 100% of the supplied hydrogen gas and to discharge it as a vent gas from the stack. According to the present invention, the vent gas is led to the hydrogen purifying step in which the vent gas is recovered, and the recovered gas is purified again and pressurized, and then supplied to the stack. In the case where steam is contained in the vent gas, a steam removing apparatus may be provided upstream of the hydrogen purifying step.

**Brief Description of Drawings**

FIG. 1 is a block diagram of a hydrogen production system according to the present invention;

FIG. 2 is a block diagram of a fuel cell power generation system according to the present invention;

FIG. 3 is a schematic view of a gas processing step in the hydrogen production system shown in FIG. 1 and the fuel cell power generation system shown in FIG. 2;

FIG. 4 is a block diagram showing a fuel cell power generation system according to a first embodiment of the present invention;

FIG. 5 is a block diagram showing a fuel cell power generation system according to a second embodiment of the present invention;

FIG. 6 is a block diagram showing a hydrogen production system according to a third embodiment of the present invention;

FIG. 7 is a block diagram showing a hydrogen production system according to a fourth embodiment of the present invention;

FIG. 8 is a block diagram showing a hydrogen production system according to a fifth embodiment of the present invention;

FIG. 9 is a block diagram showing a hydrogen production system according to a sixth embodiment of the present invention;

FIG. 10 is a block diagram showing a fuel cell power generation system according to a seventh embodiment of the present invention;

FIG. 11 is a schematic view showing an apparatus for carrying out a gasification step according to a first embodiment of the present invention;

FIG. 12 is a schematic view showing an apparatus for carrying out a gasification step according to a second embodiment of the present invention;

FIG. 13 is a diagram showing a typical configuration of a main constituent equipment in the second embodiment of the present invention; and

FIG. 14 is a schematic view showing an apparatus for carrying out a gasification step according to a third embodiment of the present invention.

**Best Mode for Carrying Out the Invention**

Embodiments of the hydrogen production system and the fuel cell power generation system by gasification of combustibles according to the present invention will be described with reference to FIGS. 1 through 10. In FIGS. 1 through 10, like or corresponding steps or members are identified with the same reference numerals to avoid the repetition of the explanation.

FIG. 1 is a schematic block diagram showing the hydrogen production system according to the present invention. As shown in FIG. 1, in the hydrogen production system according to the present invention, combustibles a are gasified in a gasification step 1, and the obtained produced gas b is processed in a gas processing step 1a to produce hydrogen gas c.

FIG. 2 is a schematic block diagram showing the fuel cell power generation system according to the present invention. As shown in FIG. 2, in the fuel cell power generation system according to the present invention, the hydrogen gas c obtained in the step shown in FIG. 1 is supplied to a fuel cell power generation step 9 to generate electricity.

FIG. 3 is a schematic block diagram showing a gas processing step in the hydrogen production system shown in FIG. 1 and the fuel cell power generation system shown in FIG. 2. As shown in FIG. 3, the gas processing step 1a of the present invention comprises a scrubbing step 2 for removing hydrogen sulfide and hydrogen chloride, a selective oxidation step 4, a shift reaction step 3 and an adsorption step 7 for separating carbon monoxide, a chemical absorption step 5 and an adsorption step 6 for separating carbon dioxide, and a hydrogen purifying step 8 for separating nitrogen and argon.

FIG. 4 is a schematic block diagram showing the fuel cell power generation system according to the first embodiment of the present invention. Combustibles a and oxygen or air 13 are supplied to a gasification step 1, and the combustibles a are pyrolyzed in the temperature range of 600 to 1400°C to produce gas b and incombustibles 12. The produced gas b is sent to a scrubbing tower 21 of a scrubbing step 2 by a blower 14. In the scrubbing tower 21, the produced gas b is brought in contact with a scrubbing water 23 to remove acid gases such as hydrogen sulfide and hydrogen chloride in the produced gas down to 10 ppm or less, preferably 1 ppm or less. The scrubbing water 23 is circulated through the scrubbing tower 21 by a circulating pump 24, and a part of the scrubbing water 23 is withdrawn at all time and a new scrubbing water whose amount is equal to the amount of the withdrawn scrubbing water is replenished. The scrubbed gas 22 discharged from the scrubbing step 2 is cooled to about 30°C in a cooler 43, and then the gas 52 is introduced into an adsorption tower 71 of the carbon monoxide adsorption step 7 where the gas 52 is brought in contact with carbon monoxide adsorbent to adsorb and remove carbon monoxide down to 100 ppm or less, preferably 10 ppm or less. There are provided at least three series of the adsorption towers 71, or at least two series of the adsorption towers depending on conditions, and the adsorption tower in each of the series repeats adsorption and desorption alternately. When the adsorption ability of the adsorbent in the adsorption tower 71 is saturated, desorption and regeneration of the adsorbent is carried out by a vacuum pump 73, and the desorbed carbon monoxide gas 74 is returned to the gasification step 1. The carbon monoxide gas 74 which has been returned to the gasification step 1 is subjected to shift reaction with steam in the gasification step, thus being converted into hydrogen and carbon dioxide. Next, the gas 72 from which carbon monoxide has been removed is supplied to an anode compartment of a fuel cell stack 91 in the fuel cell power generation step 9 and air 92 is supplied to a cathode compartment of the fuel cell stack 91 by an air blower 93 to thus generate electricity, and an anode vent gas 94 is discharged from the anode compartment and a cathode vent gas 95 is discharged from the cathode compartment. Heat generated in the cell stack at the time of power generation is cooled by cooling water 96b, 96a. The reference numeral 97 is a power generation output.

FIG. 5 is a schematic block diagram showing the fuel cell power generation system according to the second embodiment of the present invention. The scrubbed gas 22 described in the first embodiment is introduced into a shift reactor 31 of the shift reaction step 3 via a heat exchanger 33. In the shift reactor 31, carbon monoxide and steam in the scrubbed gas are converted into carbon dioxide and hydrogen at a temperature of 200 to 250°C under a shift catalytic action for thereby lowering carbon monoxide concentration to 1 % or less, preferably 0.5 % or less. The gas 32 which has been subjected to the shift reaction and discharged from the shift reactor 31 is introduced into a heat exchanger 33 where heat recovery is performed, and then the gas 32 is further cooled to about 30°C by a cooler 43. Thereafter, the gas 52 is sent to the carbon monoxide adsorption step 7 described in the first embodiment by a second blower 63. Incidentally, in this embodiment and the third through seventh embodiments described later, the carbon monoxide gas 74 desorbed in the adsorption tower 71 is returned to the suction inlet of the blower 14.

FIG. 6 is a schematic block diagram showing the fuel cell power generation system according to the third embodiment of the present invention. The gas 32, which has been subjected to the shift reaction, described in the second embodiment is led to a selective oxidation reactor 41 of the selective oxidation step 4 after recovery of heat by a heat exchanger 33. In the selective oxidation reactor 41, the gas 32 is reacted with the supplied oxygen or air at a temperature of 100 to 150°C under a selective oxidation catalytic action for thereby lowering carbon monoxide concentration in the gas 32 to 5000 ppm or less, preferably 500 ppm or less. The gas 42 which has been subjected to the selective oxidation and discharged from the selective oxidation step 4 is cooled to about 30°C by a cooler 43, and then the gas 52 is sent by a second blower to the carbon monoxide adsorption step 7 described in the first embodiment.

FIG. 7 is a schematic block diagram showing the hydrogen production system according to the fourth embodiment of the present invention. The gas 42 which has been subjected to the selective oxidation and discharged from the selective oxidation step 4 is cooled to about 30°C by a cooler 43, and then sent to an absorption tower 51a of the carbon dioxide chemical absorption step 5. In the absorption tower 51a, the gas 42 is brought in contact with the regenerated absorption solution 53a to remove carbon dioxide down to 1000 ppm or less, preferably 100 ppm or less. At the same time, in this step, acid gases such as hydrogen sulfide and hydrogen chloride are further removed down to 1 ppm or less, respectively. On the other hand, after absorption, the absorption solution 53b is led to a regeneration tower 51b via a heat exchanger 54. In the regeneration tower 51b, the absorption solution 53b is regenerated by heating the absorption solution to a temperature of 100 to 150°C with steam 57 recovered in the gasification step, and carbon dioxide gas 55 is recovered. The absorption solution after regeneration is sent to the absorption tower 51a again via a heat exchanger 54 by a delivery pump 56.

The gas 52 discharged from the carbon dioxide chemical absorption step 5 is led to the carbon monoxide adsorption step 7 by a second blower 63, and in this step, carbon monoxide is removed down to 100 ppm or less, preferably 10 ppm or less. Thereafter, the gas 72 from which carbon monoxide has been removed is sent to the hydrogen purifying step 8. The hydrogen purifying step 8 comprises at least two series of hydrogen-absorbing alloy containers 81a, 81b, and at least one hydrogen tank 82. The two series of the hydrogen-absorbing alloy containers perform hydrogen absorption and hydrogen desorption, respectively, and the changeover of hydrogen absorption and hydrogen desorption is carried out by crude hydrogen inlet solenoid valves 84a, 84b, refined hydrogen outlet solenoid valves 85a, 85b, and nitrogen and argon outlet solenoid valves 86a, 86b. Here, the case where hydrogen desorption is performed in the alloy container 81a and hydrogen absorption is performed in the alloy container 81b will be described.

In this case, the solenoid valve 84b is opened, and the gas 72 from which carbon monoxide has been removed is introduced into the alloy container 81b where hydrogen is absorbed at a temperature of 25 to 35°C. Cooling water 88a is introduced into a jacket of the alloy container 81b to cool and remove heat generated in hydrogen absorption. After saturation of absorption, the solenoid valve 84b is closed and the solenoid valve 86b is opened, and nitrogen, argon gas and a trace amount of other impurity gases 83 accumulated in voids of the alloy packed bed of the alloy container 81b are released therefrom. On the other hand, steam 89a having a temperature of 120°C or higher and recovered in the gasification step is introduced into a jacket of the alloy container 81a where the solenoid valves 84a and 86a are closed and the solenoid valve 85a is opened, whereby hydrogen absorbed in the hydrogen-absorbing alloy is released and the released refined hydrogen 87a is supplied to a consuming place such as a fuel cell via the hydrogen tank 82. The purity and pressure of the purified hydrogen gas 87a and 87b are 99.9% or more and 2 atmospheres or more, respectively.

FIG. 8 is a schematic block diagram showing the hydrogen production system according to the fifth embodiment of the present invention. The gas 42 which has been subjected to the selective oxidization and discharged from the selective oxidation step 4 is cooled to about 30°C by a cooler 43, and then sent to an adsorption tower 61 of the carbon dioxide adsorption step 6 by a second blower 63. In the adsorption tower 61, carbon dioxide in the gas is brought in contact with carbon dioxide adsorbent, and adsorbed and removed down to 100 ppm or less, preferably 10 ppm or less. There are provided at least three series of adsorption towers 61, or at least two series of adsorption towers depending on conditions, and the adsorption tower in each of the series repeats adsorption and desorption alternately. If the adsorption ability of the adsorbent in the adsorption tower 61 is saturated, desorption and regeneration of the adsorbent is carried out by a vacuum pump 64, and the desorbed carbon dioxide is released to the atmosphere. Next, the gas 62 from which carbon dioxide has been removed is sent to the adsorption tower 71 of the carbon monoxide adsorption step 7 described in the fourth embodiment.

FIG. 9 is a schematic block diagram showing the hydrogen production system according to the sixth embodiment of the present invention. In this embodiment, the gas 52 which has been subjected to the carbon dioxide absorption and discharged from the carbon dioxide chemical absorption step 5 described in the fourth embodiment is sent to the adsorption tower 61 of the carbon dioxide adsorption step 6 described in the fifth embodiment. In the adsorption tower 61, carbon dioxide in the gas is further lowered to 100 ppm or less, preferably 10 ppm or less. Here, in this embodiment, the majority of carbon dioxide is absorbed and separated in the carbon dioxide chemical absorption step 5, and hence adsorption load of carbon dioxide on the carbon dioxide adsorption step 6 is very small. Therefore, by filling carbon dioxide adsorbent and carbon monoxide adsorbent into the same adsorption tower, the above two steps can be integrated into a single step. As a filling method, carbon dioxide adsorbent and carbon monoxide adsorbent are uniformly mixed and filled, or they are filled in the form of layers on top of one another.

FIG. 10 is a schematic block diagram showing the fuel cell power generation system according to the seventh embodiment of the present invention. The purified hydrogen gas 87b described in the sixth embodiment is supplied to an anode compartment of a fuel cell stack 91 of the fuel cell 9 to generate electricity. In this embodiment, the anode vent gas 94 discharged from the anode compartment of the stack 91 is led to the hydrogen purifying step 8 to recover hydrogen gas. In the case where steam is contained in the vent gas 94, a dehumidifier may be separately provided to remove steam in advance. Further, cooling water 96a of the stack 91 is introduced into a jacket of the alloy container 81a of the hydrogen purifying step 8, and the hydrogen-absorbing alloy after hydrogen absorption is heated to release purified hydrogen 87a therefrom. On the other hand, stack cooling water 96b discharged from the jacket of the alloy container 81a is circulated again through the stack 91 for cooling the stack 91. As an example of a cooling temperature of the stack and a temperature of hydrogen desorption in the hydrogen-absorbing alloy, a temperature of the stack cooling water 96a (outlet) discharged from the fuel cell stack 91, i.e. warm water at the inlet of the jacket of the hydrogen-absorbing alloy container 81a may be 75°C, and a temperature of the stack cooling water 96b (inlet), i.e. warm water at the outlet of the jacket of the hydrogen-absorbing alloy container 81a may be 70°C.

Next, the gasification step of the present invention will be described in detail with reference to FIGS. 11 through 14.

FIG. 11 is a schematic view showing an apparatus for carrying out the gasification step according to a first embodiment of the present invention. As shown in FIG. 11, combustibles a are supplied through a raw material feeder 101 to a low-temperature gasification furnace 102 as a fluidized-bed gasification furnace where the combustibles a are pyrolyzed in the temperature range of 400 to 1000°C to produce gas containing hydrogen and carbon monoxide as a gas component useful for fuel cell power generation, and a trace amount of hydrocarbons. In this case, raising the temperature from temperature at the time of the introduction of the combustibles to the temperature in the range of 400 to 1000°C is carried out by partial combustion of the combustibles a. Incombustibles contained in the combustibles a are discharged from the gasification furnace 102. The low-temperature gasification furnace may be a fluidized-bed furnace, or alternatively may be a rotary kiln, a stoker furnace or the like. When combustibles, such as municipal wastes, which have irregular shapes and contain incombustibles are used as the raw material, it is desirable to use the fluidized-bed furnace. This is because in the fluidized-bed furnace, unburned material does not adhere to the incombustibles to be discharged from the furnace, thus being less likely to pose a problem of the treatment and disposal of incombustibles. Further, when the fluidized-bed furnace is adopted, the bed temperature is preferably low so far as pyrolysis is not obstructed. Specifically, the furnace is preferably operated at a temperature of 400 to 600°C because the incombustibles are not oxidized and thus can be easily reutilized.

The produced gas and a solid component such as ash content discharged from the low-temperature gasification furnace 102 are supplied to a dust collector 103. At this time, the inlet temperature of the dust collector is kept at 400 to 650°C. In a downstream portion of the low-temperature gasification furnace 102, i.e., in a freeboard portion, the gas temperature is lower than that in the fluidized-bed portion due to the progress of pyrolytic endothermic reaction. Therefore, even if the fluidized-bed temperature is 950°C, there is a possibility that the gas temperature in the freeboard portion becomes a temperature lower than 650°C. When the gas temperature is high, a radiation boiler may be provided. On the other hand, when the gas temperature is 400°C or below, air or oxygen may be supplied to the freeboard portion to raise the gas temperature, thereby avoiding tar troubles. A cyclone may be used as a dust collector. It is, however, desirable that a filter system having high dust-collecting performance is adopted. In the temperature range of 400 to 650°C, a high-temperature bag filter may be used as a dust collector. Alternatively, a ceramic filter or the like which is rapidly under development may be used.

The produced gas b, from which solid components such as ash and alkali metal salts have been removed in the dust collector 103, is supplied into the gas processing step 1a.

FIG. 12 is a schematic view showing an apparatus for carrying out the gasification step according to a second embodiment of the present invention. FIG. 12 shows an embodiment in which combustibles having a high calorific value such as waste plastics are used as a raw material. Combustibles a are pyrolyzed and gasified at a temperature of 400 to 1000°C in a low-temperature gasification furnace 102 to produce gas, and the produced gas is supplied into a high-temperature gasification furnace 115. In the high-temperature gasification furnace 115, the produced gas is further gasified at a temperature of 1000 to 1500°C to reduce the molecular weight of the produced gas. The high-temperature gasification furnace 115 is kept at the melting temperature of ash content contained in the produced gas or higher. Thus, 80 to 90% of the ash content contained in the produced gas is slagged, and the slag is discharged as molten slag 126 to the outside of the system. The organic matter and hydrocarbons contained in the produced gas are completely decomposed in the high-temperature gasification furnace into hydrogen, carbon monoxide, steam, and carbon dioxide. The gas produced in the high-temperature gasification furnace 115 is then cooled to 650°C or below in a waste heat boiler 119 comprising a radiation boiler to solidify molten alkali metal salts. The alkali metal salts after the solidification are collected by means of a dust collector 103. On the other hand, steam produced in the waste heat boiler 119 is supplied to a steam turbine to recover power.

The produced gas after the complete decomposition of the organic matter and the removal of the solid matter is led to the gas processing step 1a. In the gasification step shown in FIG. 12, the high-temperature gasification furnace 115 has two functions for fuel reforming and slagging of ash. This process has a great advantage that ash can be slagged and then withdrawn separately from alkali metal salts and metals having a low melting point, thereby contributing to a reduction of the problem of ash disposal.

FIG. 13 shows typical configuration of main constituent apparatuses constituting the second embodiment. The low-temperature gasification furnace 102 is a cylindrical fluidized-bed furnace having an internally circulating flow of a fluidized medium therein, and has an enhanced ability of materials to be diffused within the furnace for thereby realizing stable gasification. An oxygen-free gas is supplied into the central part of the interior of the furnace wherein a fluidized medium moves downward, while an oxygen-containing gas is supplied into the peripheral part of the furnace. This permits char produced within the low-temperature gasification furnace to be selectively combusted, contributing to an improvement in conversion rate of carbon and cold gas efficiency. The high-temperature gasification furnace 115 is a swirling-type slagging combustion furnace.

The cylindrical fluidized-bed furnace shown in FIG. 13 will be described in more detail. A conical distributor plate 106 is disposed at the bottom of the cylindrical fluidized-bed furnace. A fluidizing gas supplied through the distributor plate 106 comprises a central fluidizing gas 207 which is supplied from a central portion 204 of the bottom to the interior of the furnace as an upward flow, and a peripheral fluidizing gas 208 which is supplied from a peripheral portion 203 of the bottom to the interior of the furnace as an upward flow.

The central fluidizing gas 207 comprises an oxygen-free gas, and the peripheral fluidizing gas 208 comprises an oxygen-containing gas. The total amount of oxygen in all of the fluidizing gas is set to be 10% or higher and 30% or lower of the theoretical amount of oxygen required for combustion of combustibles. Thus, the interior of the furnace is kept in a reducing atmosphere.

The mass velocity of the central fluidizing gas 207 is set to be smaller than that of the peripheral fluidizing gas 208. The upward flow of the fluidizing gas in an upper peripheral region of the furnace is deflected toward a central region of the furnace by a deflector 206. Thus, a moving bed 209 in which the fluidized medium (silica sand is used) are moved downward and diffused on the distributor plate is formed in the central region of the furnace. In the peripheral region of the furnace, a fluidized bed 210 in which the fluidized medium is actively fluidized is formed. As indicated by the arrows 118, the fluidized medium ascends in the fluidized bed 210 in the peripheral region of the furnace, is deflected by the deflector 206 to an upper portion of the moving bed 209, and descends in the moving bed 209. Then, as indicated by the arrows 112, the fluidized medium moves along the fluidizing gas distributor plate 106 and moves into a lower portion of the fluidized bed 210. In this manner, the fluidized medium circulates in the fluidized bed 210 and the moving bed 209 as indicated by the arrows 118, 112.

While the combustibles a supplied to the upper portion of the moving bed 209 by a raw material feeder 101 descend together with the fluidized medium in the moving bed 209, the combustibles are volatilized with heating by the fluidized medium. Because there is no or little oxygen available in the moving bed 209, the pyrolysis gas (produced gas) produced by the gasification, which comprises volatile matter, is not combusted and passes through the moving bed 209 as indicated by the arrows 116. Consequently, the moving bed 209 forms a gasification zone G. The produced gas moves into a freeboard 107 as indicated by the arrow 120, and is discharged from a gas outlet 108 as a produced gas g.

Char (fixed carbon) and tar produced in the moving bed 209 which are not gasified move together with the fluidized medium from the lower portion of the moving bed 209 to the lower portion of the fluidized bed 210 in the peripheral region of the furnace as indicated by the arrows 112, and are partially oxidized by the peripheral fluidizing gas 208 having a relatively large oxygen concentration. Consequently, the fluidized bed 210 forms an oxidization zone S of the combustibles. In the fluidized bed 210, the fluidized medium is heated by the heat of combustion in the fluidized bed. The fluidized medium heated to a high temperature is turned over by the deflector 206 as indicated by the arrows 118, and transferred to the moving bed 209 where it serves as a heat source for gasification. In this manner, the fluidized bed is kept at a temperature ranging from 400 to 1000°C, preferably from 400 to 600°C, thus continuing controlled combustion reaction. A ring-shaped incombustible discharge port 205 is formed at the peripheral portion of the bottom of the fluidized-bed gasification furnace for discharging the incombustibles.

According to the fluidized-bed gasification furnace shown in FIG. 13, the gasification zone G and the oxidization zone S are formed in the fluidized bed, and the fluidized medium circulates in both zones. Because the fluidized medium serves as a heat transfer medium, good quality combustible gas having a high heating value is generated in the gasification zone G, and char and tar which are difficult to be gasified is combusted efficiently in the oxidization zone S. Consequently, gasification efficiency of combustibles such as wastes can be improved and the produced gas having a good quality can be generated. This fluidized-bed gasification furnace is the best suited as the low-temperature gasification furnace in the first to third embodiments. The low-temperature gasification furnace is not limited to the cylindrical fluidized-bed furnace, and, as with the above embodiments, a kiln-type or stoker-type furnace may be adopted.

Next, the swirling-type slagging combustion furnace will be described in more detail. The high-temperature gasification furnace 115 includes a cylindrical primary gasification chamber 115a having a substantially vertical axis, a secondary gasification chamber 115b which is slightly inclined to the horizontal direction, and a tertiary gasification chamber 115c disposed downstream of the secondary gasification chamber 115b and having a substantially vertical axis. A slag discharge port 142 is provided between the secondary gasification chamber 115b and the tertiary gasification chamber 15c. Up to the slag discharge port 142, most of ash content is slagged and discharged through the slag discharge port 142. The produced gas is supplied into the swirling-type slagging combustion furnace in the tangential direction so that a swirling flow of the gas is created within the primary gasification chamber 115a. The produced gas supplied into the swirling-type slagging combustion furnace forms a swirling flow, and solid matter contained in the gas is trapped on the circumferential inner wall surface under a centrifugal force. Therefore, advantageously, the percentage of slagging and the percentage of slag collection are high, and slag mist is less likely to be scattered.

Oxygen is supplied into the swirling-type slagging combustion furnace through a plurality of nozzles 134 so as to properly maintain the temperature distribution in the furnace. The temperature distribution is regulated so that the decomposition of hydrocarbons and the slagging of ash are completed in the primary gasification chamber 115a and the secondary gasification chamber 115b. When oxygen is solely supplied, for example, there is a fear of a nozzle being burned. Therefore, oxygen is diluted with steam or the like before supplying, as necessary. Further, steam contributes to steam reforming to reduce the molecular weight of hydrocarbons, and thus should be supplied in a satisfactory amount. This is because the interior of the furnace has a high temperature, and when the amount of the steam is insufficient, condensation polymerization takes place to produce graphite having very low reactivity which is causative of unburned fuel loss.

The slag flows down on the lower surface of the secondary gasification chamber 115b, and is discharged as molten slag 126 through the slag discharge port 142. The tertiary gasification chamber 115c serves as a buffer zone which prevents the slag discharge port 142 from being cooled by radiational cooling from a waste heat boiler provided downstream of the tertiary gasification chamber 115c, and serves to reduce the molecular weight of the undecomposed gas. An exhaust port 144 for discharging produced gas is provided at the upper end of the tertiary gasification chamber 115c, and a radiation plate 148 is provided on the lower part of the tertiary gasification chamber 115c. The radiation plate 148 serves to reduce the quantity of heat emitted through the exhaust port 144 by radiation. Reference numeral 132 denotes a start-up burner, and reference numeral 136 denotes a stabilizing burner. Organic matter and hydrocarbons contained in the produced gas are completely decomposed in the high-temperature gasification furnace into hydrogen, carbon monoxide, steam, and carbon dioxide. The gas produced in the high-temperature gasification furnace 115 is discharged from the exhaust gas port 144, and then is cooled to 650°C or below in the waste heat boiler 119 comprising a radiation boiler to solidify molten alkali metal salts. The alkali metal salts after the solidification are then collected by the dust collector 103. The high-temperature gasification furnace is not limited to this swirling-type slagging combustion furnace, and may be of other gasification furnace type.

FIG. 14 is a schematic view showing an apparatus for carrying out the gasification step according to a third embodiment of the present invention. The third embodiment shown in FIG. 14 is an embodiment in which the configuration of the high-temperature gasification furnace has been modified to a configuration which is advantageous for the discharge of the slag. Specifically, the high-temperature gasification furnace 115 has a two-stage construction, upper-stage and lower-stage furnaces. The produced gas flows into the upper-stage furnace of the high-temperature gasification furnace 115 and flows towards the lower-stage furnace. In this case, the gas flows also in a direction in which slag drops by gravity. Therefore, the flow is smooth, and clogging troubles are less likely to occur at the slag discharge port. A waste heat boiler 119 comprising the radiation boiler is provided on the lower-stage side of the high-temperature gasification furnace 115. The other construction is the same as that of the second embodiment shown in FIG. 12.

As described above, according to the present invention, combustibles can be gasified to produce gas, and the produced gas can be utilized to produce high quality hydrogen gas suitable for a fuel cell power generation at a low cost and with high efficiency. Further, the produced hydrogen gas is utilized to perform fuel cell power generation efficiently.

More specifically, the present invention offers the following advantages:

(1) The grouping of impurity gases is carried out according to their separation characteristics and the optimum separation technology can be utilized according to their separation characteristics and concentration range.
(2) Gas treatment can be carried out under a relatively low pressure, such as a pressure of atmospheric pressure to about 4 atmospheres or a pressure of 7 atmospheres at the maximum, which is achieved by a blower or a single-stage compressor which is inexpensive and has a high energy efficiency.
(3) A hydrogen purifying step using hydrogen-absorbing alloy is provided for the purpose of separating $N_2$ and Ar gas in gases and raising a pressure of hydrogen gas without consuming power, and thermal energy which is exhaust heat of the fuel cell or is generated in the gasification step can be utilized as a heat source for releasing hydrogen from the hydrogen-absorbing alloy.

## Industrial Applicability

The present invention relates to a technology for recovering chemical energy of combustibles in the form of hydrogen gas and a technology for converting hydrogen gas to electric energy with high efficiency. The present invention can be utilized in a system in which combustibles such as combustible wastes or coal are gasified to produce gas, and the produced gas is then utilized to produce hydrogen gas, and an electric generating system in which the produced hydrogen gas is supplied to a fuel cell to generate electricity.

## Claims

**1.** A hydrogen production method by gasification of combustibles, said method comprising a gasification step for gasifying combustibles and a gas processing step for producing hydrogen by refining the gas produced in said gasification step, said gas processing step comprising:

a gas scrubbing step for absorbing and removing dust and a trace amount of acid gases such as hydrogen chloride and hydrogen sulfide in the produced gas obtained in said gasification step by bringing the produced gas into contact with water or alkali solution; and
a carbon monoxide adsorption step for adsorbing and separating carbon monoxide by bringing the produced gas scrubbed in said gas scrubbing step into contact with carbon monoxide adsorbent.

**2.** A hydrogen production method by gasification of combustibles according to claim 1, further comprising a selective oxidation step for selectively oxidizing carbon monoxide in the scrubbed produced gas by a catalytic reaction with oxygen-containing gas, after said gas scrubbing step.

**3.** A hydrogen production method by gasification of combustibles according to claim 1 or 2, further comprising a shift reaction step for converting carbon monoxide and steam in the produced gas into hydrogen gas and carbon dioxide by a catalytic reaction, after said gas scrubbing step or before said selective oxidation step.

**4.** A hydrogen production method by gasification of combustibles according to any one of claims 1 to 3, further comprising a carbon dioxide chemical absorption step for absorbing and separating carbon dioxide in the produced gas by bringing the produced gas into contact with alkaline absorption solution, before said carbon monoxide adsorption step.

**5.** A hydrogen production method by gasification of combustibles according to any one of claims 1 to 4, further comprising a carbon dioxide adsorption step for adsorbing and separating carbon dioxide in the produced gas by bringing the produced gas into contact with carbon dioxide adsorbent, before said carbon monoxide adsorption step.

**6.** A hydrogen production method by gasification of combustibles according to any one of claims 1 to 5, further comprising a hydrogen purifying step using hydrogen-absorbing alloy for separating nitrogen and argon in the produced gas and pressurizing hydrogen gas, after said carbon monoxide adsorption step.

**7.** A power generation method by gasification of combustibles for generating electricity by supplying hydrogen gas produced by the method according to any one of claims 1 to 6 to a fuel cell.

**8.** A power generation method by gasification of combustibles according to claim 7, wherein exhaust heat recovered by the cooling of said fuel cell is utilized as a heat source for hydrogen desorption in said hydrogen-absorbing alloy according to claim 6.

**9.** A power generation method by gasification of combustibles according to claim 7 or 8, wherein said fuel cell used in said fuel cell power generation step comprises a polymer electrolyte fuel cell or a phosphoric acid fuel cell.

**10.** A hydrogen production apparatus by gasification of combustibles, said apparatus comprising a gasification furnace for gasifying combustibles and a gas processing apparatus for producing hydrogen by refining the gas produced in said gasification furnace, said gas processing apparatus comprising:

a scrubbing tower for absorbing and removing dust and a trace amount of acid gases such as hydrogen chloride and hydrogen sulfide in the produced gas obtained in said gasification furnace by bringing the produced gas into contact with water or alkali solution; and
a carbon monoxide adsorption tower for adsorbing and separating carbon monoxide by bringing the produced gas scrubbed in said scrubbing tower into contact with carbon monoxide adsorbent.

**11.** A hydrogen production apparatus by gasification of combustibles according to claim 10, further comprising a selective oxidation reactor provided downstream of said scrubbing tower for selectively oxidizing carbon monoxide in the scrubbed produced gas by a catalytic reaction with oxygen-containing gas.

**12.** A hydrogen production apparatus by gasification of combustibles according to claim 11, further comprising a shift reactor provided downstream of said scrubbing tower or upstream of said selective oxidation reactor for converting carbon monoxide and steam in the produced gas into hydrogen gas and carbon dioxide by a catalytic reaction.

**13.** A hydrogen production apparatus by gasification of combustibles according to any one of claims 10 to 12, further comprising a carbon dioxide absorption tower provided upstream of said carbon monoxide adsorption tower for absorbing and separating carbon dioxide in the produced gas by bringing the produced gas into contact with alkaline absorption solution.

**14.** A hydrogen production apparatus by gasification of combustibles according to any one of claims 10 to 13, further comprising a carbon dioxide adsorption tower provided upstream of said carbon monoxide absorption tower for adsorbing and separating carbon dioxide in the produced gas by bringing the produced gas into contact with carbon dioxide adsorbent.

**15.** A hydrogen production apparatus by gasification of combustibles according to any one of claims 10 to 14, further comprising an alloy accommodating container packed with hydrogen-absorbing alloy provided downstream of said carbon monoxide adsorption tower for separating nitrogen and argon in the produced gas and pressurizing hydrogen gas.

**16.** A power generation system by gasification of combustibles for generating electricity by supplying hydrogen gas produced by the apparatus according to any one of claims 10 to 15 to a fuel cell.

**17.** A power generation system by gasification of combustibles according to claim 16, wherein exhaust heat recovered by the cooling of said fuel cell is utilized as a heat source for hydrogen desorption in said hydrogen-absorbing alloy according to claim 15.

**18.** A power generation system by gasification of combustibles according to claim 16 or 17, wherein said fuel cell comprises a polymer electrolyte fuel cell or a phosphoric acid fuel cell.

FIG. 1

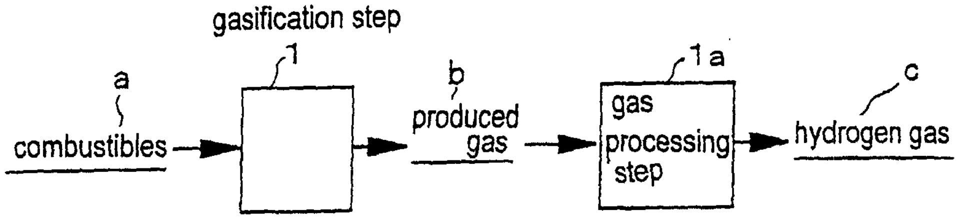
gasification step
1
a
combustibles
b
produced gas
1a
gas processing step
c
hydrogen gas

FIG. 2

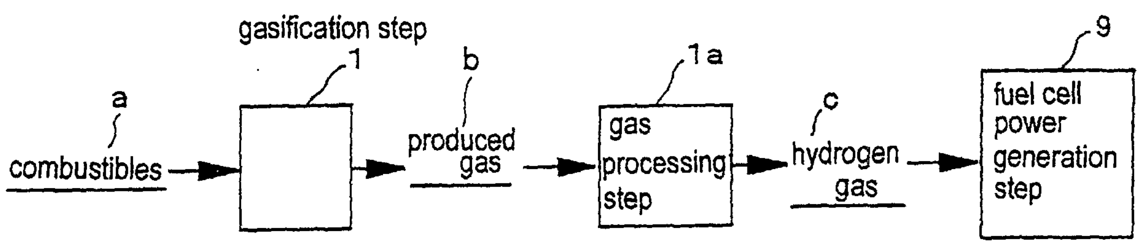
gasification step
1
a
combustibles
b
produced gas
1a
gas processing step
c
hydrogen gas
9
fuel cell power generation step

FIG. 3

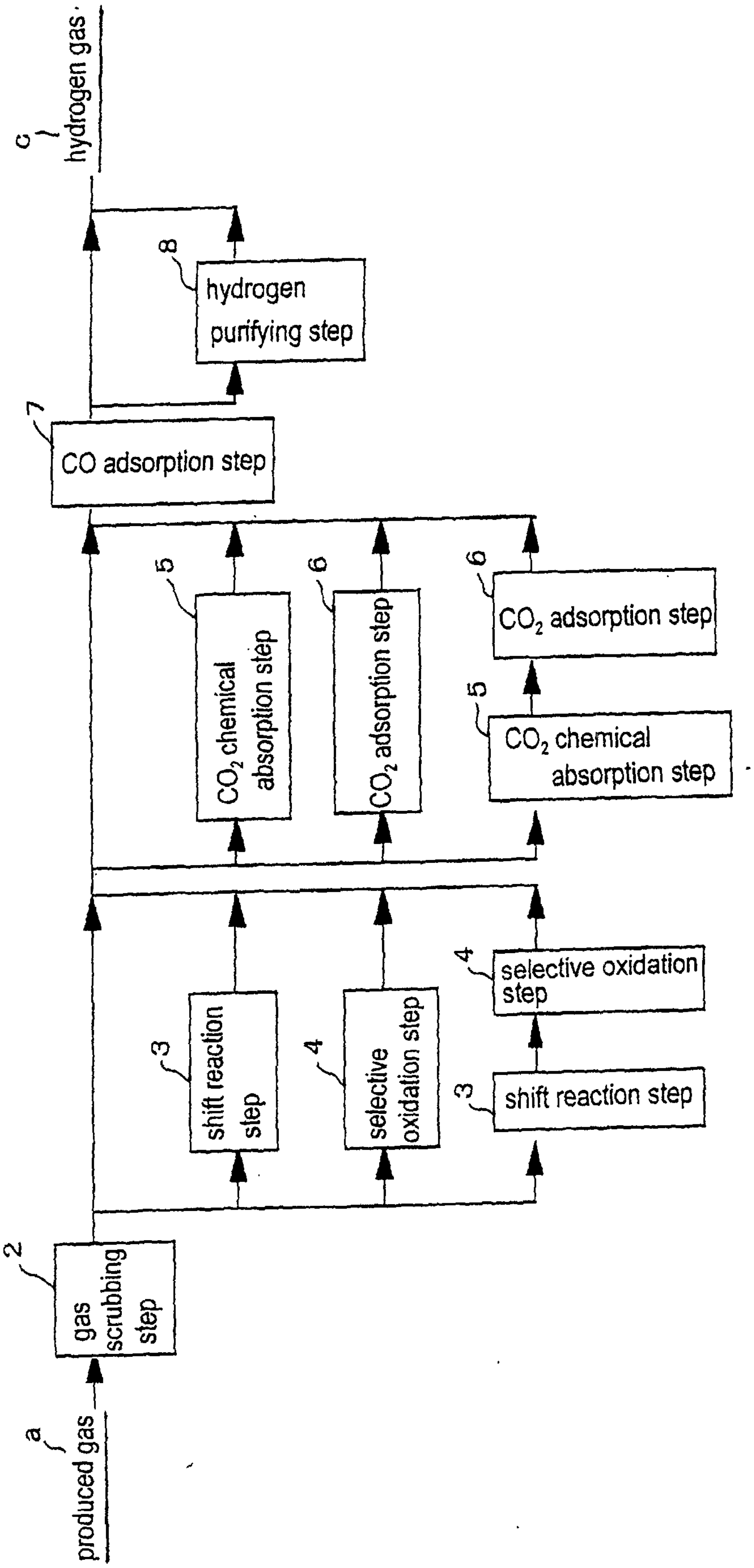
a
produced gas
2
gas scrubbing step
3
shift reaction step
4
selective oxidation step
4
selective oxidation step
3
shift reaction step
5
$CO_2$ chemical absorption step
6
$CO_2$ adsorption step
6
$CO_2$ adsorption step
5
$CO_2$ chemical absorption step
7
CO adsorption step
8
hydrogen purifying step
c
hydrogen gas

FIG. 4

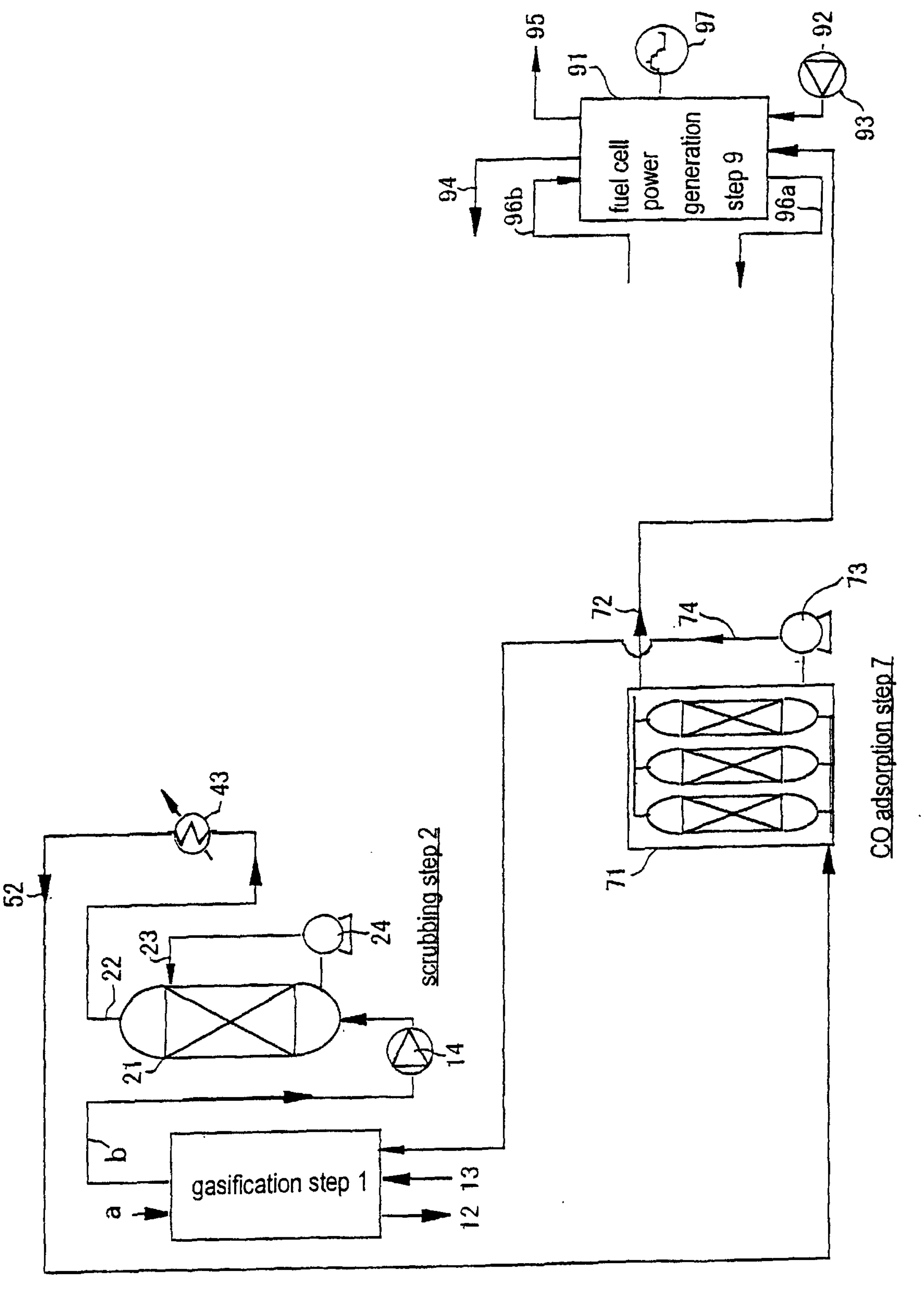
gasification step 1
a
b
12
13
scrubbing step 2
14
21
22
23
24
43
52
CO adsorption step 7
71
72
73
74
fuel cell power generation step 9
91
92
93
94
95
96a
96b
97

FIG. 5

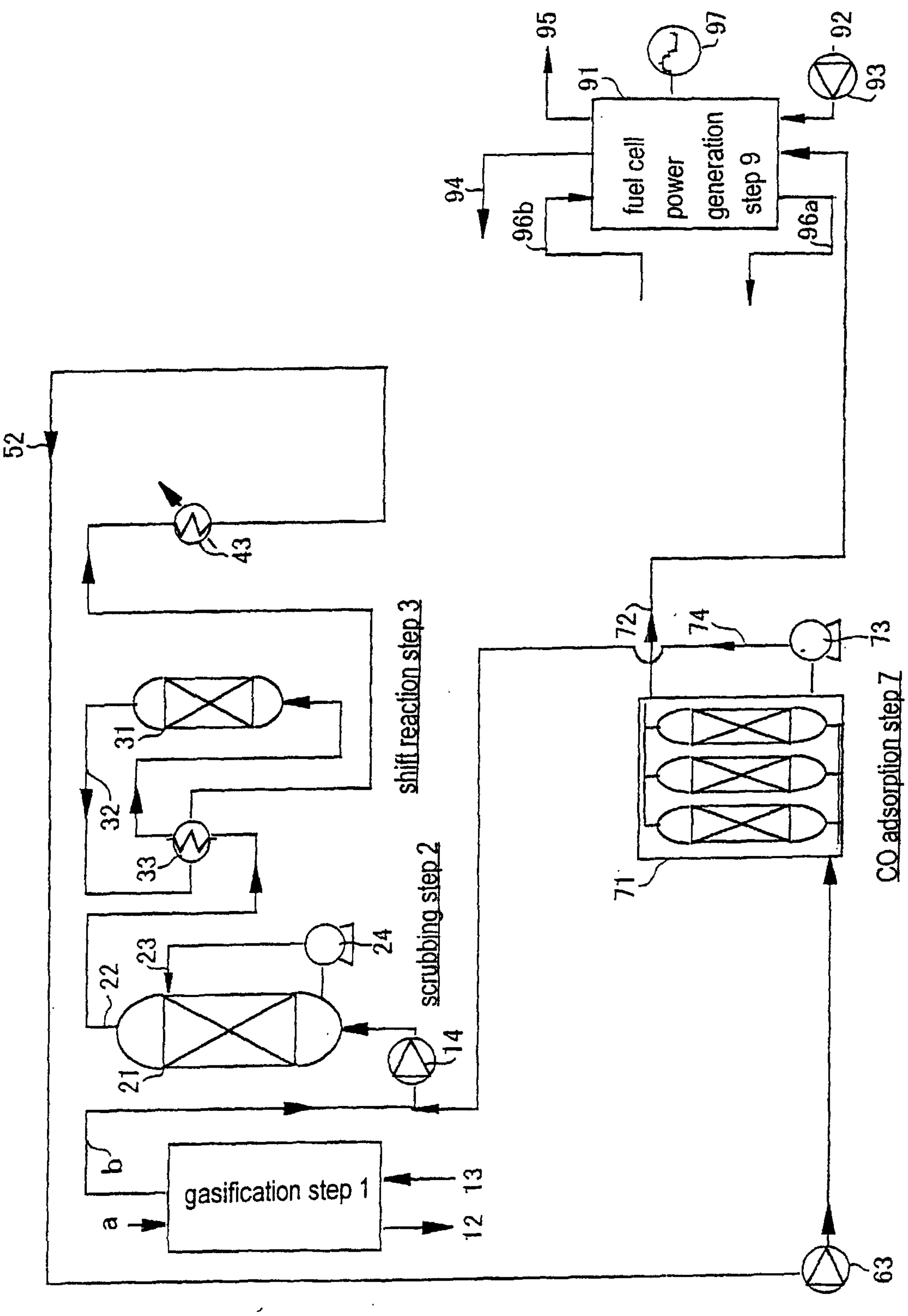
gasification step 1
scrubbing step 2
shift reaction step 3
CO adsorption step 7
fuel cell power generation step 9
a
b
12
13
14
21
22
23
24
31
32
33
43
52
63
71
72
73
74
91
92
93
94
95
96a
96b
97

FIG. 6

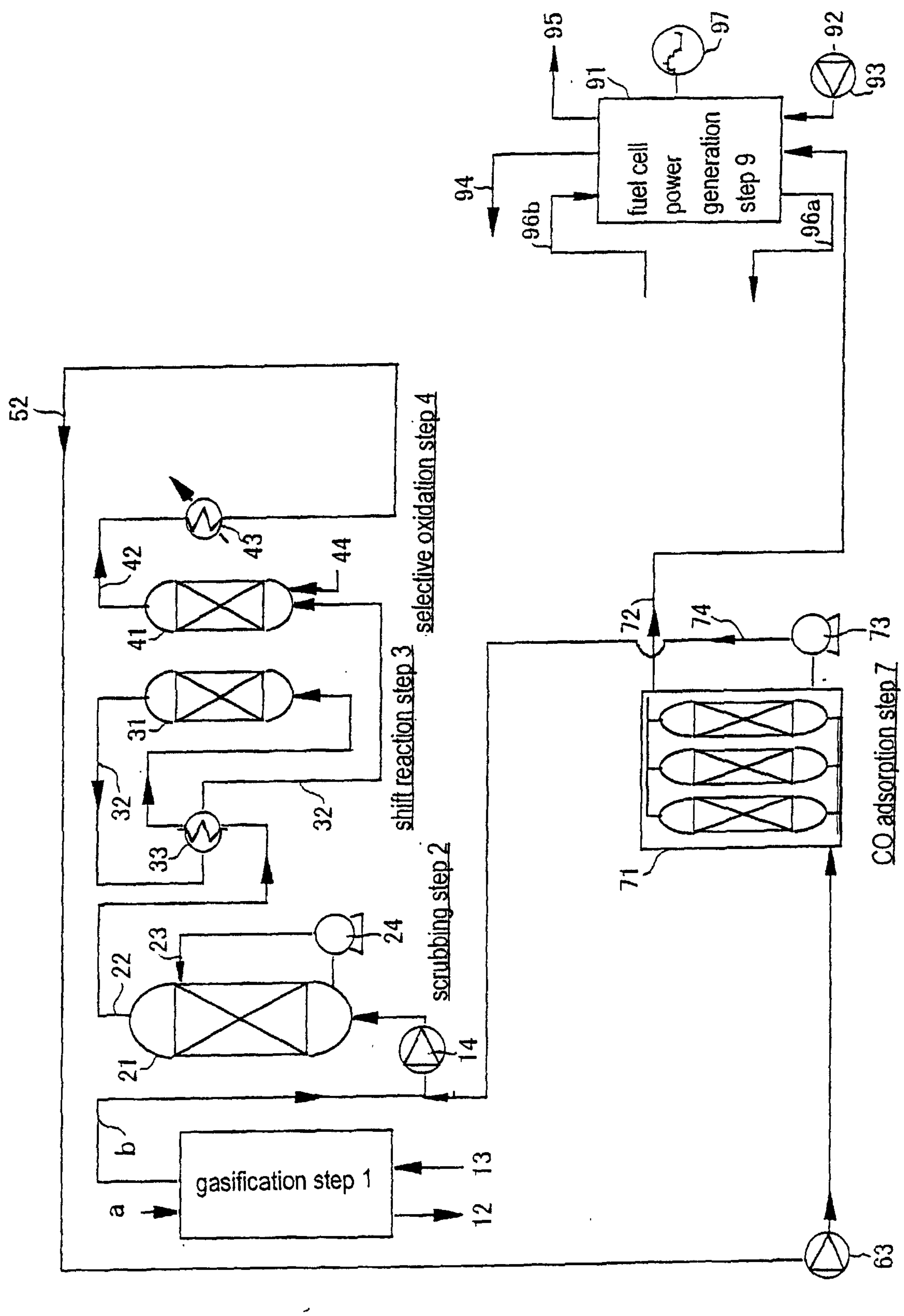
gasification step 1
scrubbing step 2
shift reaction step 3
selective oxidation step 4
CO adsorption step 7
fuel cell power generation step 9
a
b
12
13
14
21
22
23
24
31
32
33
41
42
43
44
52
63
71
72
73
74
91
92
93
94
95
96a
96b
97

FIG. 7

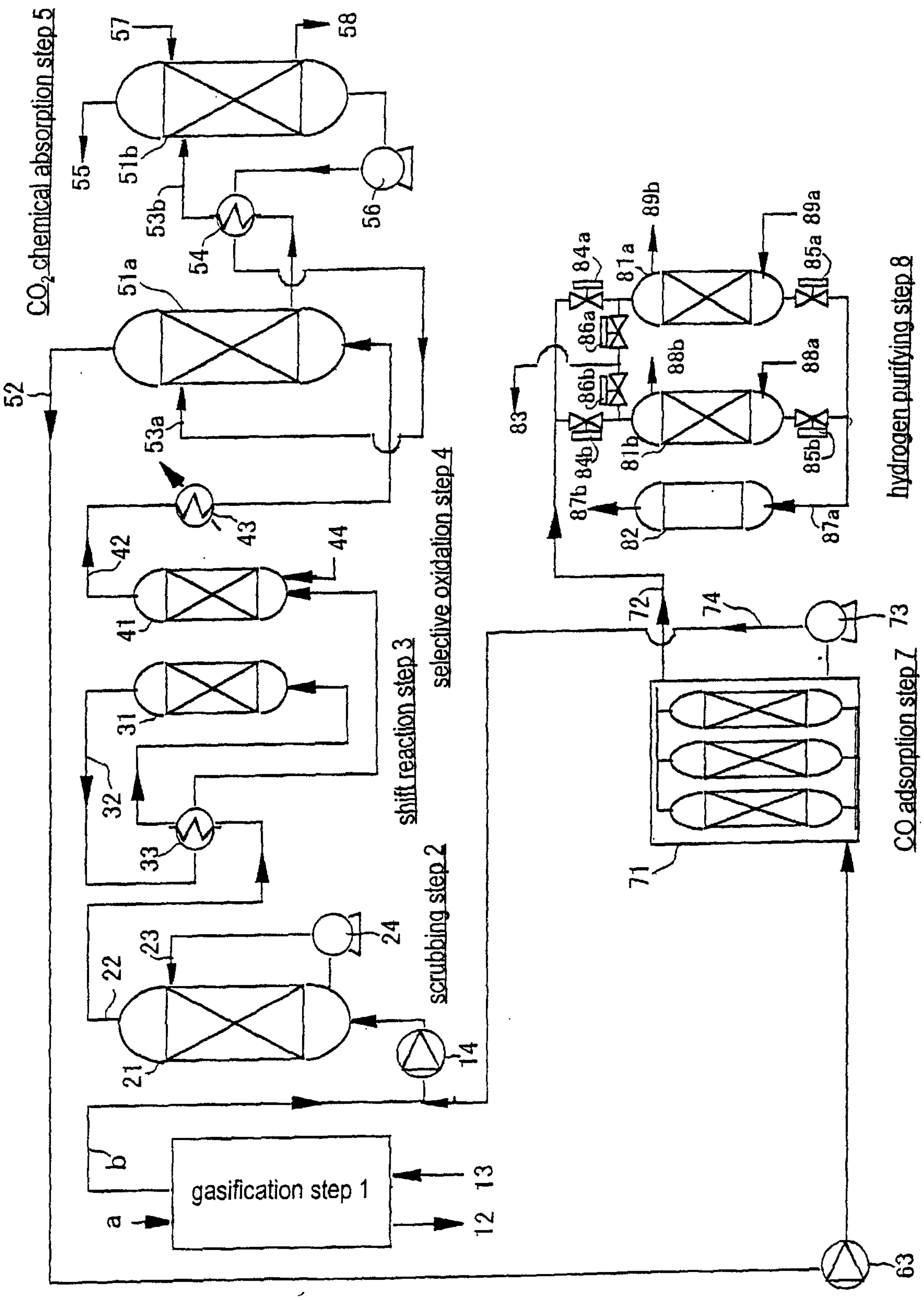
gasification step 1
scrubbing step 2
shift reaction step 3
selective oxidation step 4
$CO_2$ chemical absorption step 5
CO adsorption step 7
hydrogen purifying step 8
a
b
12
13
14
21
22
23
24
31
32
33
41
42
43
44
51a
51b
52
53a
53b
54
55
56
57
58
63
71
72
73
74
81a
81b
82
83
84a
84b
85a
85b
86a
86b
87a
87b
88a
88b
89a
89b

FIG. 8

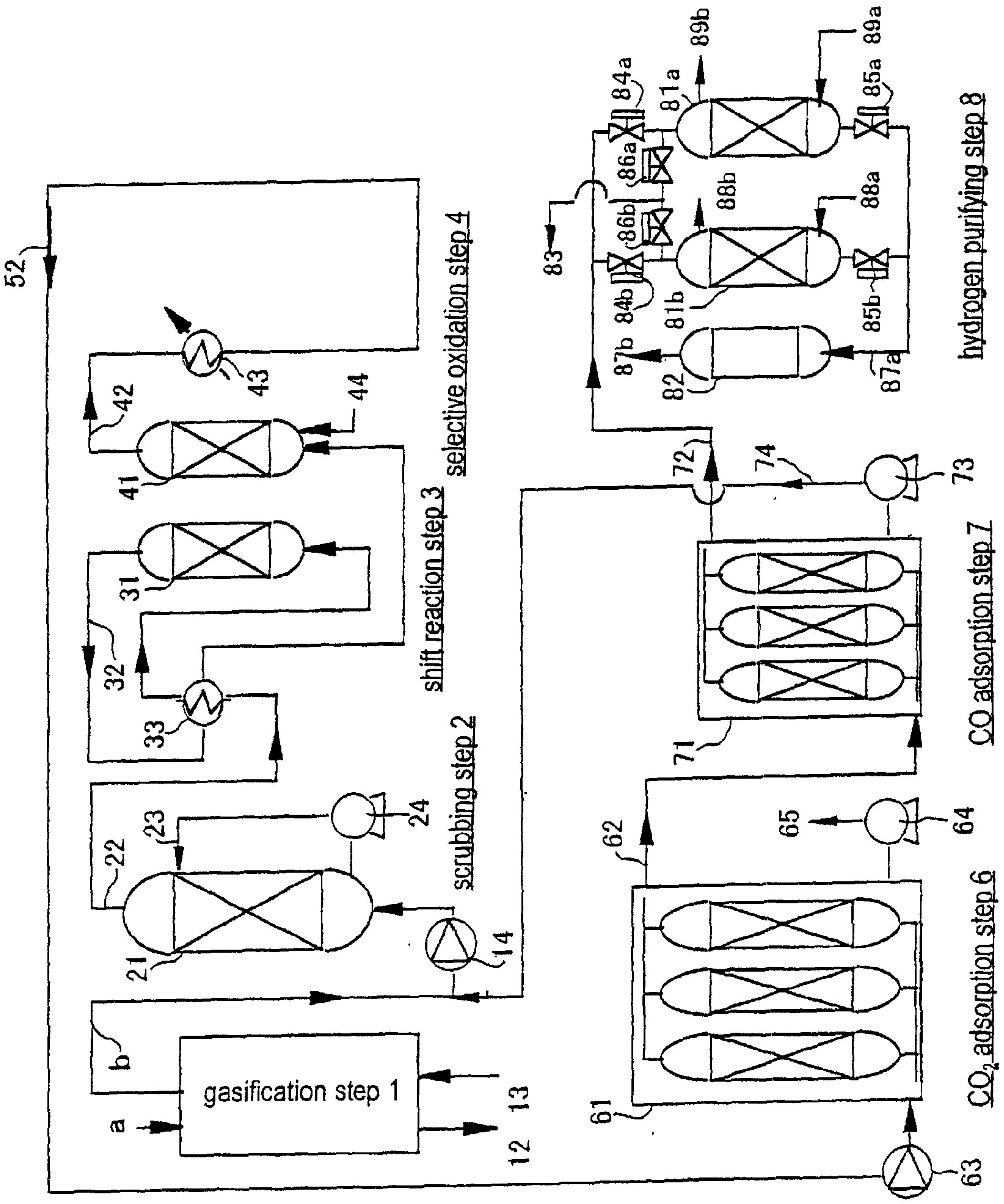

gasification step 1
scrubbing step 2
shift reaction step 3
selective oxidation step 4
$CO_2$ adsorption step 6
CO adsorption step 7
hydrogen purifying step 8
a
b
12
13
14
21
22
23
24
31
32
33
41
42
43
44
52
61
62
63
64
65
71
72
73
74
81a
81b
82
83
84a
84b
85a
85b
86a
86b
87a
87b
88a
88b
89a
89b

FIG. 9

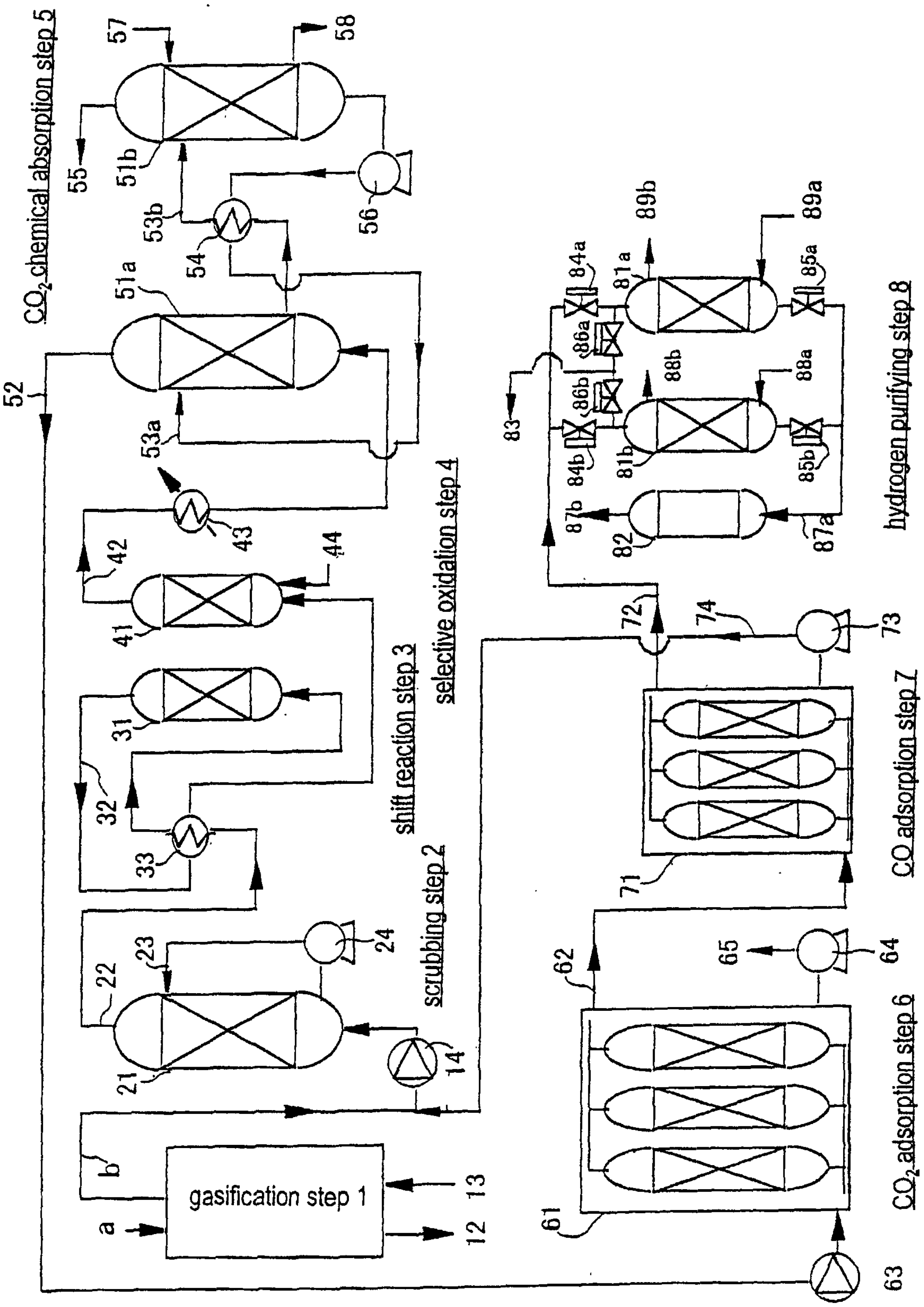
gasification step 1
scrubbing step 2
shift reaction step 3
selective oxidation step 4
$CO_2$ chemical absorption step 5
$CO_2$ adsorption step 6
CO adsorption step 7
hydrogen purifying step 8
a
b
12
13
14
21
22
23
24
31
32
33
41
42
43
44
51a
51b
52
53a
53b
54
55
56
57
58
61
62
63
64
65
71
72
73
74
81a
81b
82
83
84a
84b
85a
85b
86a
86b
87a
87b
88a
88b
89a
89b

FIG. 10

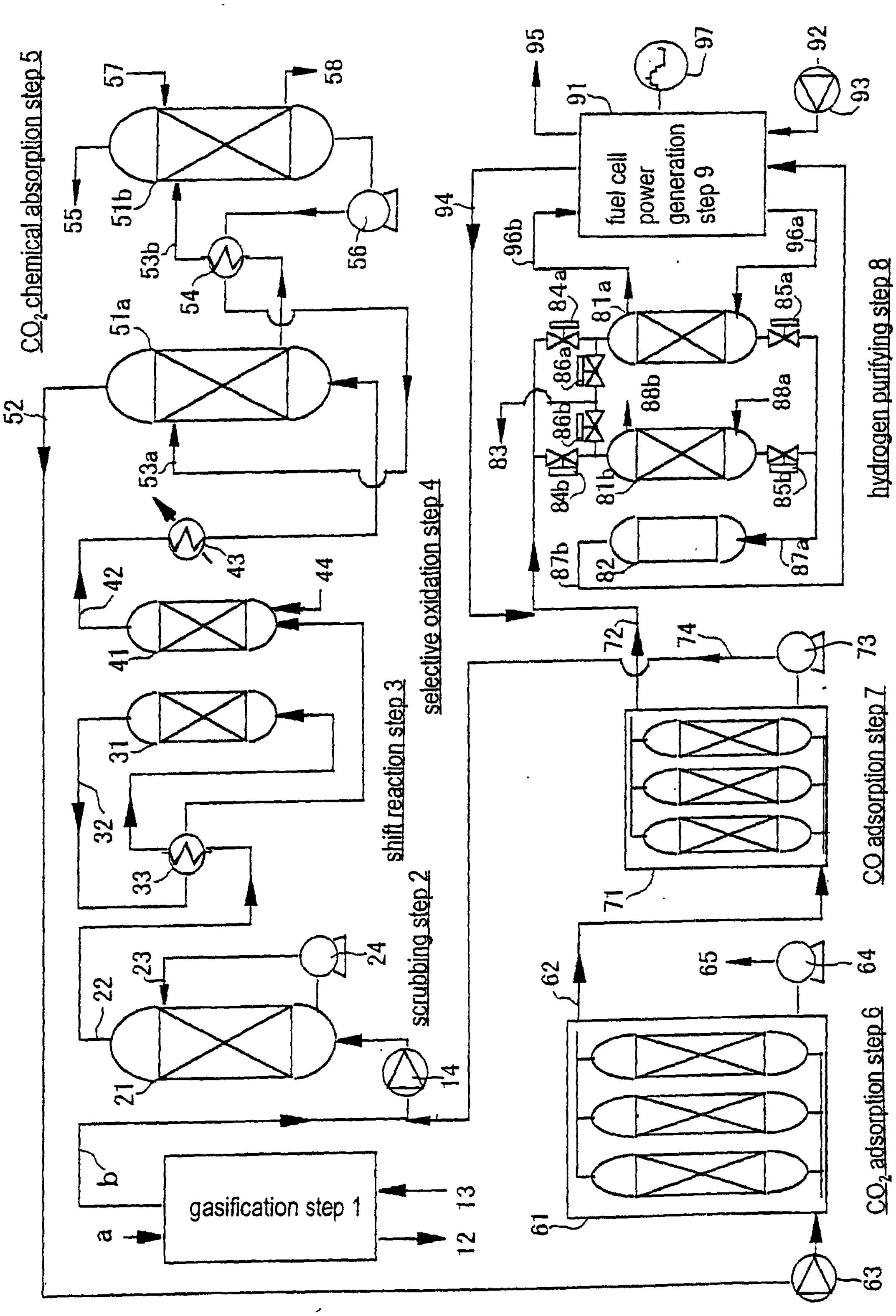
CO$_2$ chemical absorption step 5
selective oxidation step 4
shift reaction step 3
scrubbing step 2
gasification step 1
CO$_2$ adsorption step 6
CO adsorption step 7
hydrogen purifying step 8
fuel cell power generation step 9
a
b
12
13
14
21
22
23
24
31
32
33
41
42
43
44
51a
51b
52
53a
53b
54
55
56
57
58
61
62
63
64
65
71
72
73
74
81a
81b
82
83
84a
84b
85a
85b
86a
86b
87a
87b
88a
88b
91
92
93
94
95
96a
96b
97

*FIG. 11*

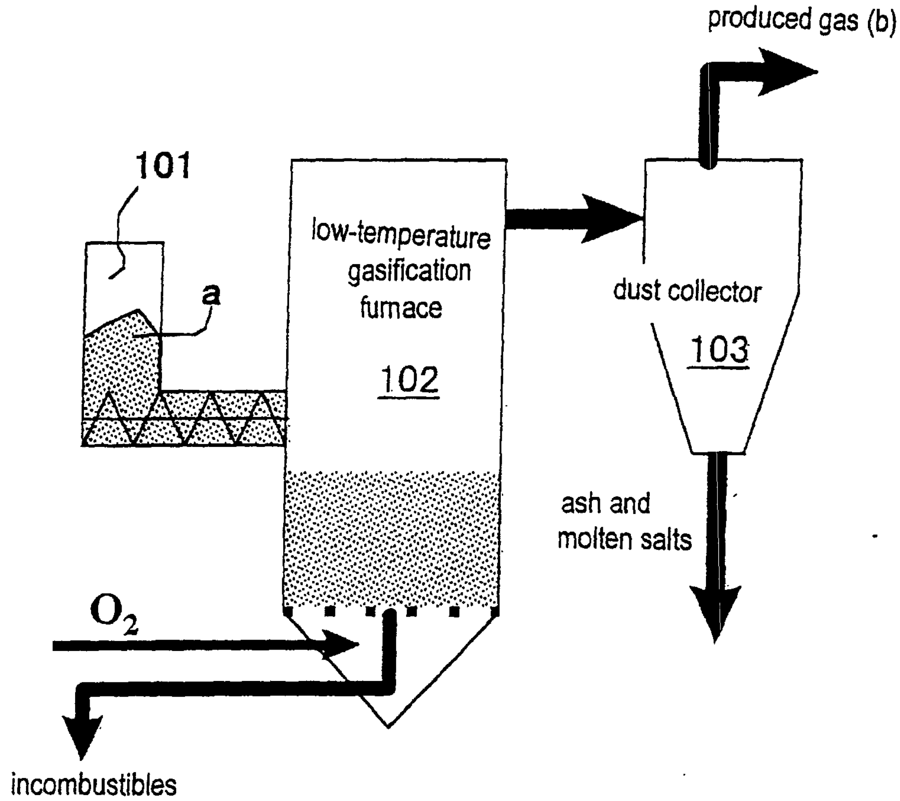
produced gas (b)
101
a
low-temperature gasification furnace
102
dust collector
103
ash and molten salts
$O_2$
incombustibles

FIG. 12

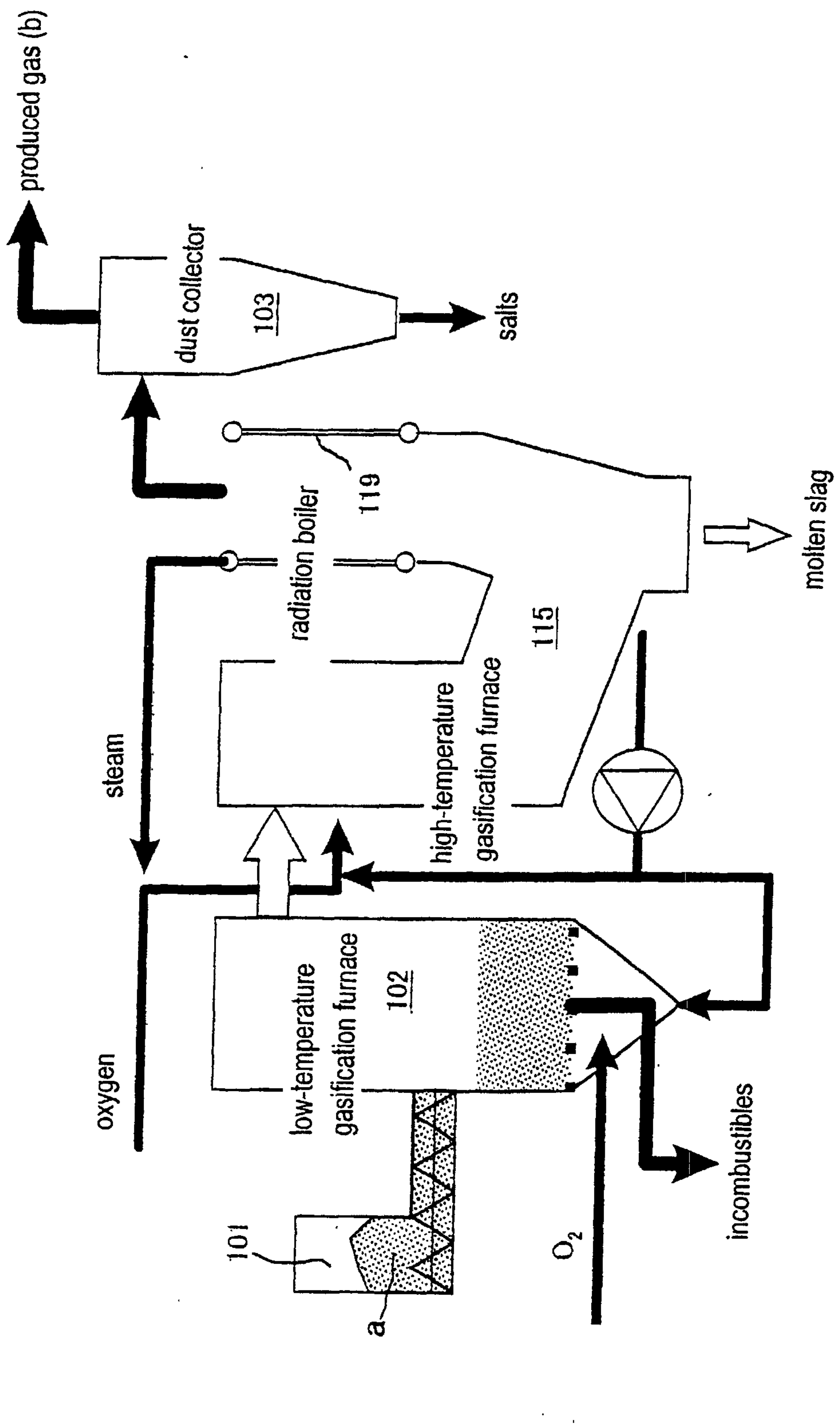
produced gas (b)
dust collector
103
salts
radiation boiler
119
molten slag
115
steam
high-temperature
gasification furnace
oxygen
low-temperature
gasification furnace
102
101
a
$O_2$
incombustibles

FIG. 13

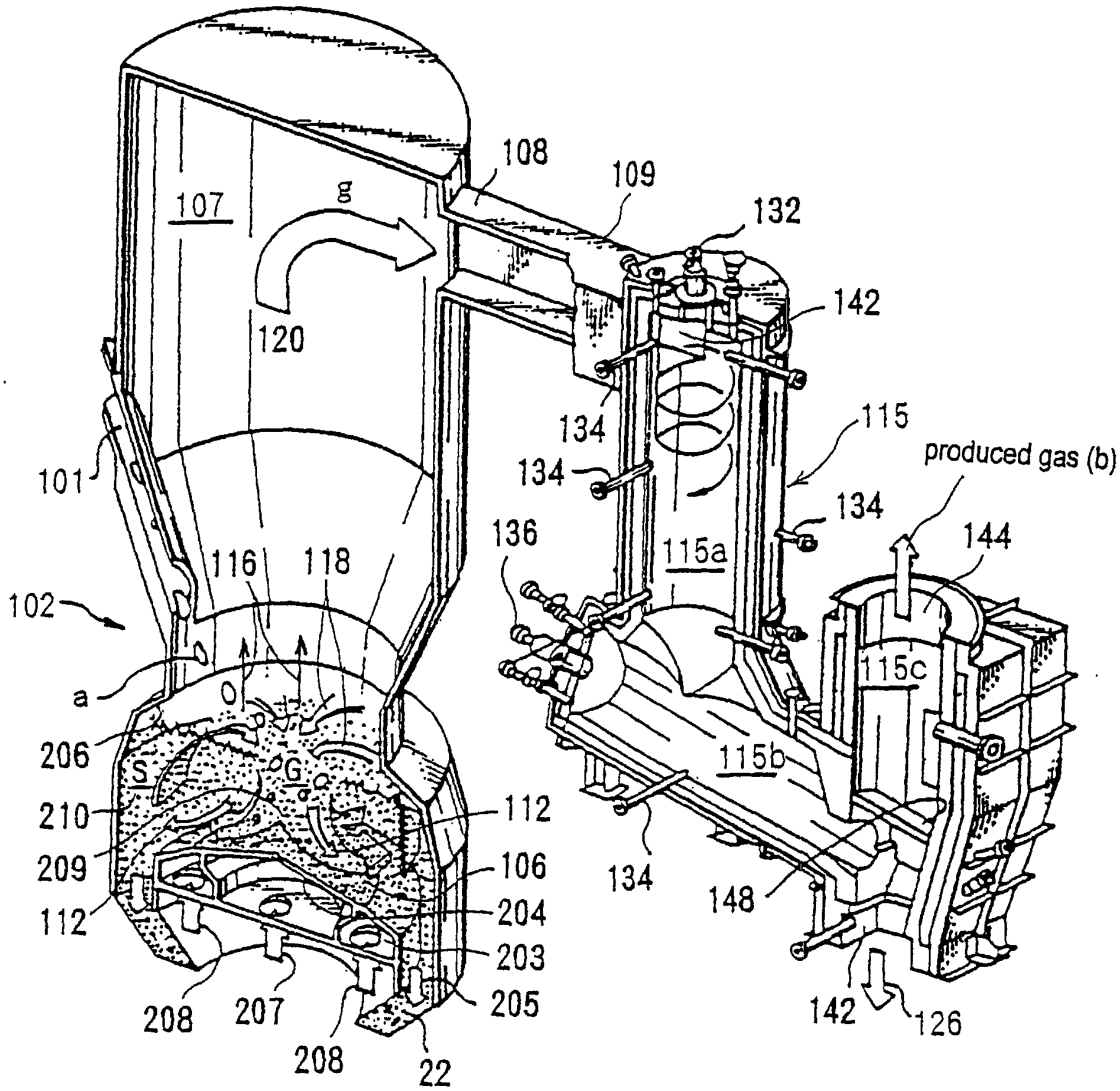
108
109
132
107
g
142
120
115
134
134
produced gas (b)
101
134
136
144
116
118
115a
102
115c
a
206
S
G
115b
210
112
209
106
134
148
112
204
203
205
142
126
208
207
208
22

FIG. 14

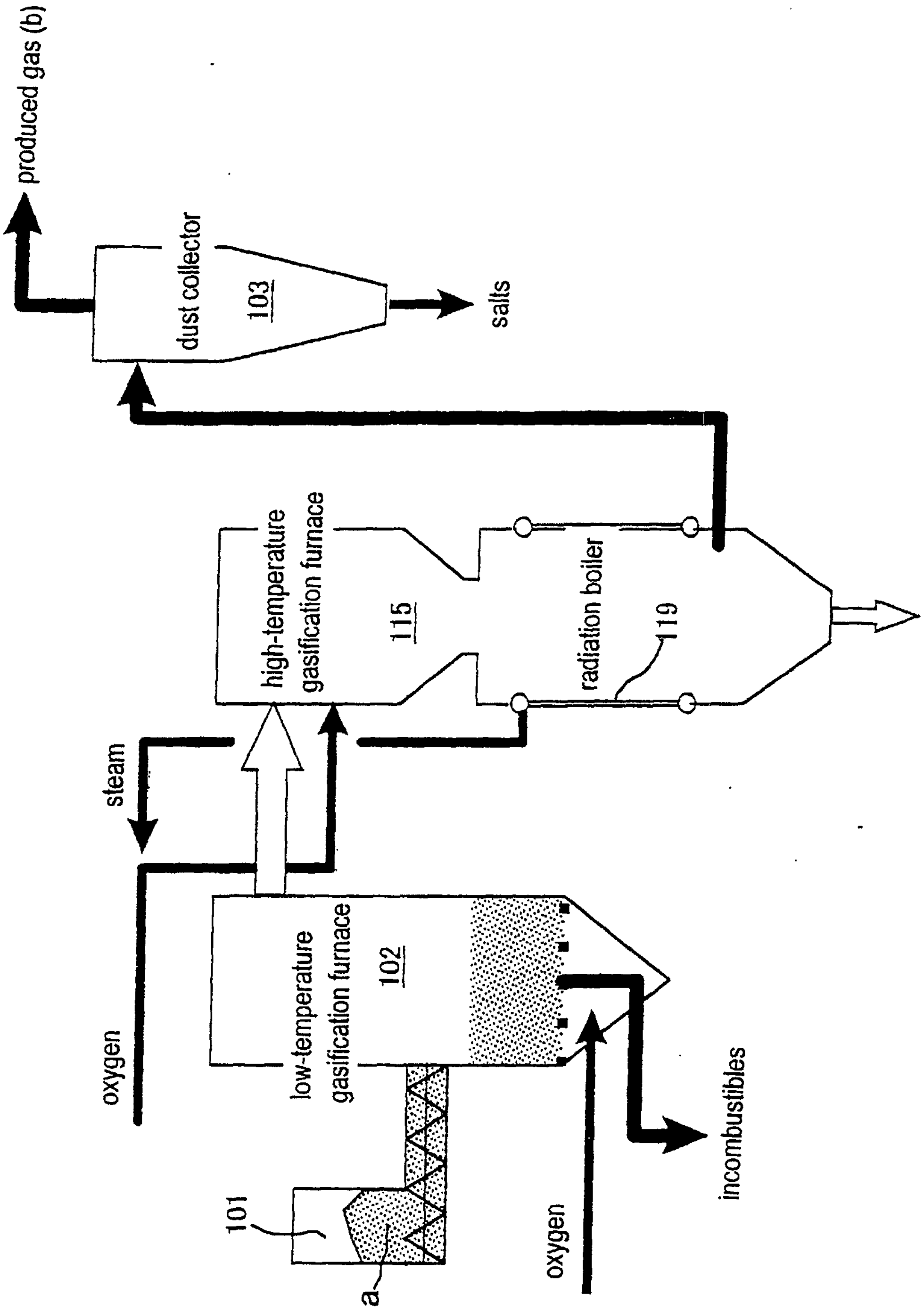
produced gas (b)
dust collector
103
salts
high-temperature gasification furnace
115
radiation boiler
119
molten slag
steam
oxygen
low-temperature gasification furnace
102
101
a
oxygen
incombustibles

## INTERNATIONAL SEARCH REPORT

International application No.
PCT/JP00/02149

A. CLASSIFICATION OF SUBJECT MATTER
Int.Cl$^7$ C01B3/50, B01D53/14, C10K3/04, C10L3/00, C10J3/00, H01M8/06, H01M8/08, H01M8/10

According to International Patent Classification (IPC) or to both national classification and IPC

B. FIELDS SEARCHED

Minimum documentation searched (classification system followed by classification symbols)
Int.Cl$^7$ C01B3/50, B01D53/14, C10K3/04, C10L3/00, C10J3/00, H01M8/06, H01M8/08, H01M8/10

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2000 |
| Kokai Jitsuyo Shinan Koho | 1971-2000 | Jitsuyo Shinan Toroku Koho | 1969-2000 |

Electronic data base consulted during the international search (name of data base and, where practicable, search terms used)
WPI/L

C. DOCUMENTS CONSIDERED TO BE RELEVANT

| Category* | Citation of document, with indication, where appropriate, of the relevant passages | Relevant to claim No. |
|---|---|---|
| X<br>Y | US, 5457250, A (Hoechst Aktiengesellschaft),<br>10 October, 1995 (10.10.95),<br>Claims; Column 5, line 62 to Column 6, line 27; Figs<br>& JP, 7-197041, A<br>Claims; Par. Nos. [0022] to [0023]; Figs | 1,10<br>2-9,11-18 |
| Y | US, 5604047, A (Exxon Research and Engineering Company),<br>18 February, 1997 (18.02.97)<br>& JP, 9-10538, A | 1-18 |
| Y | JP, 59-75987, A (Tsukishima Kikai Co., Ltd. et al.),<br>28 April, 1984 (28.04.84) (Family: none) | 1-18 |
| Y | JP, 3-208801, A (Mitsubishi Heavy Industries, Ltd.),<br>12 September, 1991 (12.09.91) (Family: none) | 1-18 |
| Y | JP, 62-278769, A (NKK CORPORATION),<br>03 December, 1987 (03.12.87) (Family: none) | 4,13 |
| Y | JP, 4-65302, A (Electric Power Development Company Ltd. et al.),<br>02 March, 1992 (02.03.92) (Family: none) | 5,14 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 27 June, 2000 (27.06.00) | 04 July, 2000 (04.07.00) |
| Name and mailing address of the ISA/<br>Japanese Patent Office | Authorized officer |
| Facsimile No. | Telephone No. |

Form PCT/ISA/210 (second sheet) (July 1992)

**INTERNATIONAL SEARCH REPORT**

International application No.
PCT/JP00/02149

C (Continuation). DOCUMENTS CONSIDERED TO BE RELEVANT

| Category* | Citation of document, with indication, where appropriate, of the relevant passages | Relevant to claim No. |
|---|---|---|
| Y | JP, 60-35730, U (Mitsubishi Heavy Industries, Ltd.), 12 March, 1985 (12.03.85) (Family: none) | 6,8,15,17 |

Form PCT/ISA/210 (continuation of second sheet) (July 1992)